(19) Europäisches Patentamt
European Patent Office
Office européen des brevets

(11) EP 1 379 572 B1

(12) # EUROPÄISCHE PATENTSCHRIFT

(45) Veröffentlichungstag und Bekanntmachung des Hinweises auf die Patenterteilung:
**29.12.2010 Patentblatt 2010/52**

(21) Anmeldenummer: **02745222.6**

(22) Anmeldetag: **09.04.2002**

(51) Int Cl.:
*C08G 73/00* (2006.01) *C08J 5/00* (2006.01)
*C08L 79/00* (2006.01) *H01M 8/00* (2006.01)
*C08J 7/00* (2006.01) *B05D 3/00* (2006.01)

(86) Internationale Anmeldenummer:
**PCT/EP2002/003901**

(87) Internationale Veröffentlichungsnummer:
**WO 2002/081547 (17.10.2002 Gazette 2002/42)**

(54) **PROTONENLEITENDE MEMBRAN UND DEREN VERWENDUNG**

PROTON-CONDUCTING MEMBRANE AND THE USE THEREOF

MEMBRANE CONDUCTRICE DE PROTONS ET SON UTILISATION

(84) Benannte Vertragsstaaten:
**AT BE CH CY DE DK ES FI FR GB GR IE IT LI LU MC NL PT SE TR**

(30) Priorität: **09.04.2001 DE 10117687**

(43) Veröffentlichungstag der Anmeldung:
**14.01.2004 Patentblatt 2004/03**

(60) Teilanmeldung:
**10007142.2**

(73) Patentinhaber: **BASF Fuel Cell Research GmbH
67056 Ludwigshafen (DE)**

(72) Erfinder:
- **CALUNDANN, Gordon
North Plainfield, NJ 07060 (US)**
- **SANSONE, Michael, J.
Berkeley Heights, NJ 07927 (US)**
- **UENSAL, Oemer
55128 Mainz (DE)**
- **KIEFER, Joachim
65510 Idstein (DE)**

(74) Vertreter: **Luderschmidt, Schüler & Partner
Patentanwälte
John-F.-Kennedy-Strasse 4
65189 Wiesbaden (DE)**

(56) Entgegenhaltungen:
**US-A- 3 313 783 US-A- 5 525 436**

- **OSAHENI J A ET AL: "SYNTHESIS AND PROCESSING OF HETEROCYCLIC POLYMERS AS ELECTRONIC, OPTOELECTRONIC, AND NONLINEAR OPTICAL MATERIALS. 4 NEW CONJUGATED RIGID-ROD POLY(BENZOBIS (IMIDAZOLE)S" MACROMOLECULES, AMERICAN CHEMICAL SOCIETY. EASTON, US, Bd. 28, Nr. 4, 13. Februar 1995 (1995-02-13), Seiten 1172-1179, XP000490475 ISSN: 0024-9297**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine neuartige protonenleitende Polymermembran auf Basis von Polyazolen, die aufgrund ihrer hervorragenden chemischen und thermischen Eigenschaften vielfältig eingesetzt werden kann und sich insbesondere als Polymer-Elektrolyt-Membran (PEM) in sogenannten PEM-Brennstoffzellen eignet.

Polyazole wie beispielsweise Polybenzimidazole (®Celazole) sind seit langem bekannt. Die Herstellung derartiger Polybenzimidazole (PBI) erfolgt üblicherweise durch Umsetzung von 3,3',4,4'-Tetraaminobiphenyl mit isophthalsäure oder Diphenyl-isophthalsäure bzw. deren Estern in der Schmelze. Das enstehende Präpolymer erstarrt im Reaktor und wird anschließend mechanisch zerkleinert. Anschließend wird das pulverförmige Präpolymer in einer Festphasen-Polymerisation bei Temperaturen von bis zu 400°C endpolymerisiert und das gewünschte Polybenzimidazole erhalten.

Zur Herstellung von Polymerfolien wird das PBI in polaren, aprotischen Lösemitteln wie beispielsweise Dimethylacetamid (DMAc) gelöst und eine Folie mittels klassischer Verfahren erzeugt.

Protonenleitende, d.h. mit Säure dotierte Polyazol-Membranen für den Einsatz in PEM-Brennstoffzellen sind bereits bekannt. Die basischen Polyazol-Folien werden mit konzentrierter Phosphorsäure oder Schwefelsäure dotiert und wirken dann als Protonenleiter und Separatoren in sogenannten Polymerelektrolyt-Membran-Brennstoffzellen (PEM-Brennstoffzellen).

Bedingt durch die hervorragenden Eigenschaften des Polyazol-Polymeren können derartige Polymerelektrolytmembranen - zu Membran-Elektroden-Einheiten (MEE) verarbeitet - bei Dauerbetriebstemperaturen oberhalb 100°C insbesondere oberhalb 120°C in Brennstoffzellen eingesetzt werden. Diese hohe Dauerbetriebstemperatur erlaubt es die Aktivität der in der Membran-Elektroden-Einheit (MEE) enthaltenen Katalysatoren auf Edelmetallbasis zu erhöhen. Insbesondere bei der Verwendung von sogenannten Reformaten aus Kohlenwasserstoffen sind im Reformergas deutliche Mengen an Kohlenmonoxid enthalten, die überlicherweise durch eine aufwendige Gasaufbereitung bzw. Gasreinigung entfernt werden müssen. Durch die Möglichkeit die Betriebstemperatur zu erhöhen, können deutlich höhere Konzentrationen an CO-Verunreinigungen dauerhaft toleriert werden.

Durch Einsatz von Polymer-Elektrolyt-Membranen auf Basis von Polyazol-Polymeren kann zum einen auf die aufwendige Gasaufbereitung bzw. Gasreinigung teilweise verzichtet werden und andererseits die Katalysatorbeladung in der Membran-Elektroden-Einheit reduziert werden. Beides ist für einen Masseneinsatz von PEM-Brennstoffzellen unabdingbare Voraussetzung, da ansonsten die Kosten für ein PEM-Brennstoffzellen-System zu hoch sind.

Die bislang bekannten mit Säure dotierten Polymermembrane auf Basis von Polyazolen zeigen bereits ein günstiges Eigenschaftsprofil. Aufgrund der für PEM-Brennstoffzellen angestrebten Anwendungen, insbesondere im Automobilbereich- und der dezentralen Strom- und Wärmeerzeugung (Stationärbereich), sind diese insgesamt jedoch noch zu verbessern. Darüber hinaus haben die bislang bekannten Polymermembranen einen hohen Gehalt an Dimethylacetamid (DMAc), der mittels bekannter Trocknungsmethoden nicht vollständig entfernt werden kann. In der deutschen Patentanmeldung Nr. 10109829.4 wird eine Polymermembran auf Basis von Polyazolen beschrieben, bei der die DMAc-Kontamination beseitigt wurde. Derartige Polymermembran zeigen zwar verbesserte mechanische Eigenschaften, hinsichtlich der spezifischen Leitfähigkeit werden jedoch 0,1 S/cm (bei 140°C) nicht überschritten.

Aufgabe der vorliegenden Erfindung ist Säure enthaltende Polymermembranen auf Basis von Polyazolen bereitzustellen, die einerseits die anwendungstechnischen Vorteile der Polymermembran auf Basis von Polyazolen aufweisen und andererseits eine gesteigerte spezifische Leitfähigkeit, insbesondere bei Betriebstemperaturen oberhalb von 100°C, aufweisen und zusätzliche ohne Brenngasbefeuchtung auskommen.

Wir haben nun gefunden, daß eine protonenleitende Membran auf Basis von Polyazolen erhalten werden kann, wenn das Polyazol-Präpolymere in Polyphosphorsäure endpolymerisiert wird. Bei dieser neuen Membran kann auf die in der deutschen Patentanmeldung Nr. 10109829.4 beschriebe spezielle Nachbehandlung verzichtet werden. Die dotierten Polymermembranen zeigen eine signifikant verbesserte Protonenleitfähigkeit, das nachträgliche dotieren der Folie entfällt.

Gegenstand der vorliegenden Erfindung ist eine protonenleitende Polymermembran auf Basis von Polyazolen erhältlich durch ein Verfahren umfassend die Schritte

A) Umsetzung von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 350°C, vorzugsweise bis zu 300°C,

B) Lösen des gemäß Schritt A) erhaltenen festen Prä-Polymeren in Polyphosphorsäure,

C) Erwärmen der Lösung erhältlich gemäß Schritt B) unter Inertgas auf Temperaturen von bis zu 300°C, vorzugsweise bis zu 280°C unter Ausbildung des gelösten Polyazol-Polymeren .

D) Bilden einer Membran unter Verwendung der Lösung des Polyazol-Polymeren gemäß Schritt C) auf einem Träger und

E) Behandlung der in Schritt D) gebildeten Membran in Gegenwart von Feuchtigkeit bei Temperaturen und für eine

Dauer ausreichend bis diese selbsttragend ist.

Bei den erfindungsgemäß eingesetzten aromatischen und heteroaromatischen Tetra-Amino-Verbindungen handelt es sich vorzugsweise um 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminediphenylether, 3,3',4,4'-Tetraaminobenzophenon, 3,3',4,4'-Tetraaminodiphenylmethan und 3,3',4,4'-Tetraaminodiphenyldimethylmethan sowie deren Salze, insbesondere deren Mono-, Di-, Tri- und Tetrahydrochloridderivate.

Bei den erfindungsgemäß eingesetzten aromatischen Carbonsäuren handelt es sich um Di-carbonsäuren und Tri-carbonsäuren und Tetra-Carbonsäuren bzw. deren Estern oder deren Anhydride oder deren Säurechloride. Der Begriff aromatische Carbonsäuren umfasst gleichermaßen auch heteroaromatische Carbonsäuren. Vorzugsweise handelt es sich bei den aromatischen Dicarbonsäuren um Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure, 1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride. Bei den aromatischen Tri-, tetracarbonsäuren bzw. deren C1-C20-Alkyl-Ester oder C5-C12-Aryl-Ester oder deren Säureanhydride oder deren Säurechloride handelt es sich bevorzugt um 1,3,5-Benzol-tricarbonsäure (Trimesic acid), 1,2,4-Benzol-tricarbonsäure (Trimellitic acid), (2-Carboxyphenyl)iminodiessigsäure, 3,5,3'-Biphenyltricarbonsäure, 3,5,4'-Biphenyltricarbonsäure,

Bei den aromatischen Tetracarbonsäuren bzw. deren C1-C20-Alkyl-Ester oder C5-C 12-Aryl-Ester oder deren Säureanhydride oder deren Säurechloride handelt es sich bevorzugt um 3,5,3',5'-biphenyltetracarboxylic acid, 1,2,4,5-Benzoltetracarbonsäure, Benzophenontetracarbonsäure, 3,3',4,4'-Biphenyltetracarbonsäure, 2,2',3,3'-Biphenyltetracarbonsäure, 1,2,5,6-Naphthalintetracarbonsäure, 1,4,5,8-Naphthalintetracarbonsäure.

Bei den erfindungsgemäß eingesetzten heteroaromatischen Carbonsäuren handelt es sich um heteroaromatischen Di-carbonsäuren und Tri-carbonsäuren und Tetra-Carbonsäuren bzw. deren Estern oder deren Anhydride. Als Heteroaromatische Carbonsäuren werden aromatische Systeme verstanden welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure, 2,5-Pyrazindicarbonsäure, 2,4,6-Pyridintricarbonsäure, Benzimidazol-5,6-dicarbonsäure. Sowie deren C1-C20-Alkyl-Ester oder C5-C12-Aryl-Ester, oder deren Säureanhydride oder deren Säurechloride.

Der Gehalt an Tri-carbonsäure bzw. Tetracarbonsäuren (bezogen auf eingesetzte Dicarbonsäure) beträgt zwischen 0 und 30 Mol-%, vorzugsweise 0,1 und 20 Mol %, insbesondere 0,5 und 10 Mol-%.

Bei den erfindungsgemäß eingesetzten aromatischen und heteroaromatischen Diaminocarbonsäuren handelt es sich bevorzugt um Diaminobenzoesäure und deren Mono und Dihydrochloridderivate.

Bevorzugt werden in Schritt A) Mischungen von mindestens 2 verschiedenen aromatischen Carbonsäuren einzusetzen. Besonders bevorzugt werden Mischungen eingesetzt, die neben aromatischen Carbonsäuren auch heteroaromatische Carbonsäuren enthalten. Das Mischungsverhältnis von aromatischen Carbonsäuren zu heteroaromatischen Carbonsäuren beträgt zwischen 1:99 und 99:1, vorzugsweise 1:50 bis 50:1.

Bei diesem Mischungen handelt es sich insbesondere um Mischungen von N-heteroaromatischen Di-carbonsäuren und aromatischen Dicarbonsäuren. Nicht limitierende Beispiele dafür sind Isophthalsäure, Terephthalsäure, Phthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure, 1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6-Pyrimidindicarbonsäure,2,5-Pyrazindicarbonsäure.

Die Prä-Polymerisation gemäß Schritt A) führt bei dem gewählten Temperaturbereich und bei Einsatz von 3,3', 4,4'-Tetraaminobiphenyl (TAB) und Isophthalsäureestern (OR) zur Ausbildung von den korrespondierenden Amiden bzw. Iminen (vgl. nachfolgendes Schema)

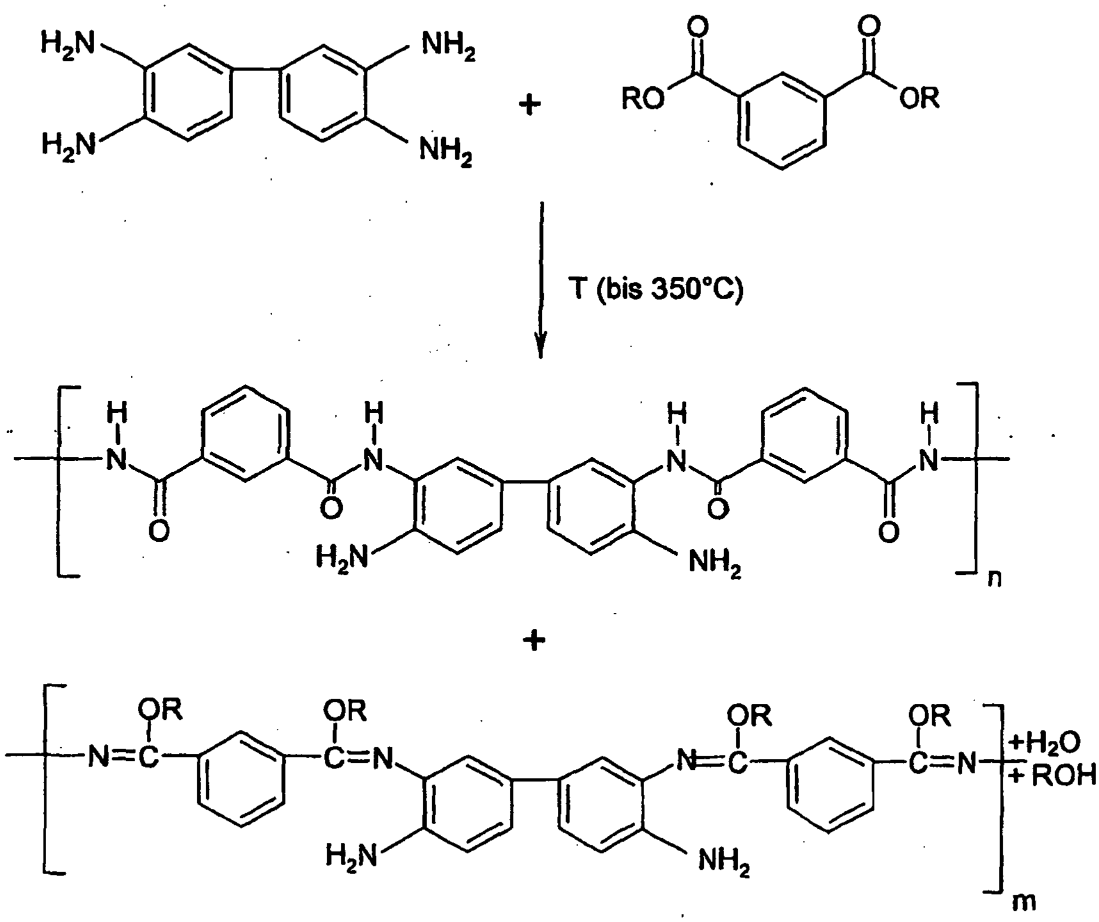


Während der Reaktion verfestigt sich das erhaltene Präpolymer und nach gegebenenfalls nach grober Mahlung in Polyphosphorsäure gelöst werden.

Bei der in Schritt B) verwendeten Polyphosphorsäure handelt es sich um handelsübliche Polyphosphorsäuren wie diese beispielsweise von Riedel-de Haen erhältlich sind. Die Polyphosphorsäuren $H_{n+2}P_nO_{3n+1}$ (n>1) besitzen üblicherweise einen Gehalt berechnet als $P_2O_5$ (acidimetrisch) von mindestens 83%. Anstelle einer Lösung des Präpolymeren kann auch eine Dispersion/Suspension erzeugt werden.

Die in Schritt B) erzeugte Mischung weist ein Gewichtsverhältnis Polyphosphorsäure zu Summe Präpolymer von 1:10000 bis 10000:1, vorzugsweise 1:1000 bis 1000:1, insbesondere 1:100 bis 100:1, auf.

Das in Schritt C) gebildete Polymere auf Basis von Polyazol enthält wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVI) und/oder (XVII) und/oder (XVIII) und/oder (XIX) und/oder (XX) und/oder (XXI) und/oder (XXII)

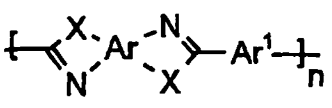

(I)

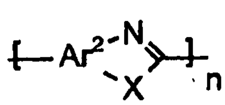

(II)

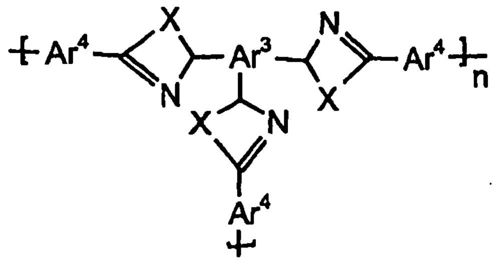

(III)

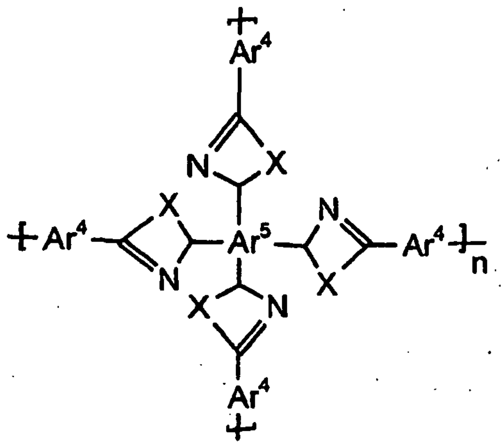

(IV)

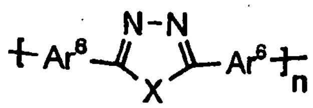

(V)

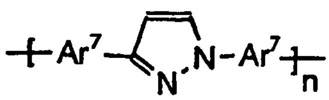

(VI)

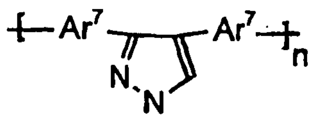

(VII)

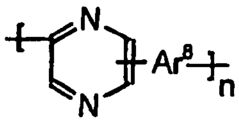

(VIII)

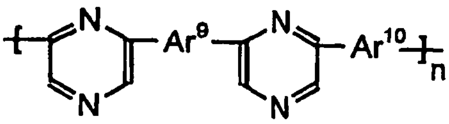

(IX)

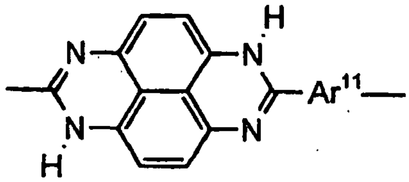

(X)

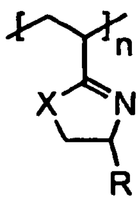

(XI)

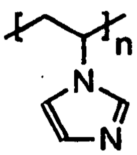

(XII)

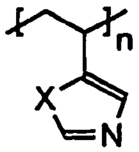

(XIII)

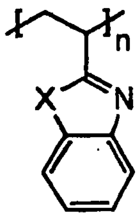

(XIV)

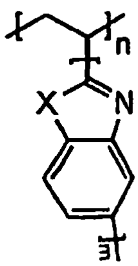

(XV)

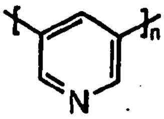

(XVI)

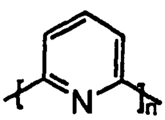

(XVII)

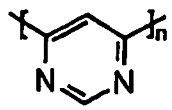

(XVIII)

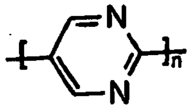

(XIX)

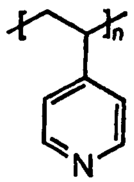

(XXI)

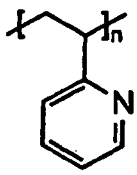

(XXII)

worin

- Ar gleich oder verschieden sind und für eine vierbindige aromatische oder heteroaromatische Gruppe, die ein- oder mehrkernig sein kann,
- $Ar^1$ gleich oder verschieden sind und für eine zweibindige aromatische oder heteroaromatische Gruppe, die ein- oder mehrkernig sein kann,
- $Ar^2$ gleich oder verschieden sind und für eine zwei oder dreibindige aromatische oder heteroaromatische Gruppe, die ein- oder mehrkernig sein kann,
- $Ar^3$ gleich oder verschieden sind und für eine dreibindige aromatische oder heteroaromatische Gruppe, die ein- oder mehrkernig sein kann,
- $Ar^4$ gleich oder verschieden sind und für eine dreibindige aromatische oder heteroaromatische Gruppe, die ein- oder mehrkernig sein kann,
- $Ar^5$ gleich oder verschieden sind und für eine vierbindige aromatische oder heteroaromatische Gruppe, die ein- oder mehrkernig sein kann,
- $Ar^6$ gleich oder verschieden sind und für eine zweibindige aromatische oder heteroaromatische Gruppe, die ein- oder mehrkernig sein kann,
- $Ar^7$ gleich oder verschieden sind und für eine zweibindige aromatische oder heteroaromatische Gruppe, die ein- oder mehrkernig sein kann,
- $Ar^8$ gleich oder verschieden sind und für eine dreibindige aromatische oder heteroaromatische Gruppe, die ein- oder mehrkernig sein kann,
- $Ar^9$ gleich oder verschieden sind und für eine zwei- oder drei- oder vierbindige aromatische oder heteroaromatische Gruppe, die ein- oder mehrkernig sein kann,

Ar10 gleich oder verschieden sind und für eine zwei- oder dreibindige aromatische oder heteroaromatische Gruppe, die ein- oder mehrkernig sein kann,

Ar11 gleich oder verschieden sind und für eine zweibindige aromatische oder heteroaromatische Gruppe, die ein- oder mehrkernig sein kann,

X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt

R gleich oder verschieden für Wasserstoff, eine Alkylgruppe und eine aromatische Gruppe steht und

n, m eine ganze Zahl größer gleich 10, bevorzugt größer gleich 100 ist,

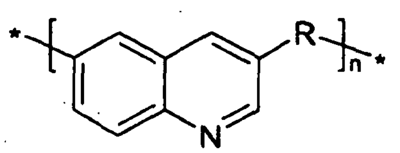

(XX)

worin

R gleich oder verschieden für eine Alkylgruppe und eine aromatische Gruppe steht und

n eine ganze Zahl größer gleich 10, bevorzugt größer gleich 100 ist.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Chinolin, Pyridin, Bipyridin, Pyridazin, Pyrimidin, Pyrazin, Triazin, Tetrazin, Pyrol, Pyrazol, Anthracen, Benzopyrrol, Benzotriazol, Benzooxathiadiazol, Benzooxadiazol, Benzopyridin, Benzopyrazin, Benzopyrazidin, Benzopyrimidin, Benzopyrazin, Benzotriazin, Indolizin, Chinolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren, die gegebenenfalls auch substituiert sein können, ab.

Dabei ist das Substitionsmuster von $Ar^1$, $Ar^4$, $Ar^6$, $Ar^7$, $Ar^8$, $Ar^9$, $Ar^{10}$, $Ar^{11}$ beliebig, im Falle vom Phenylen beispielsweise kann $Ar^1$, $Ar^4$, $Ar^6$, $Ar^7$, $Ar^8$, $Ar^9$, $Ar^{10}$, $Ar^{11}$ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrende Benzimidazoleinheiten werden durch die nachfolgende Formeln wiedergegeben:

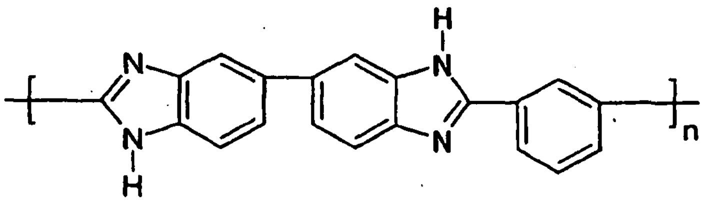

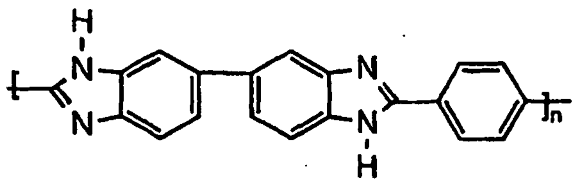

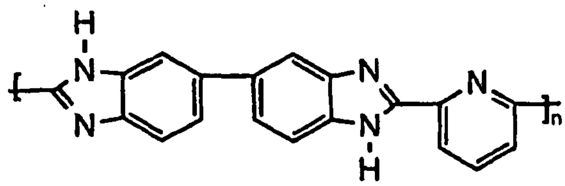

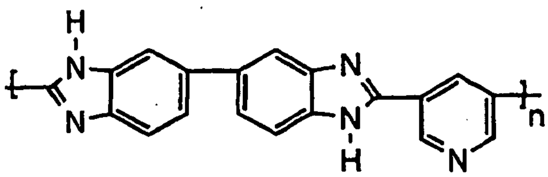

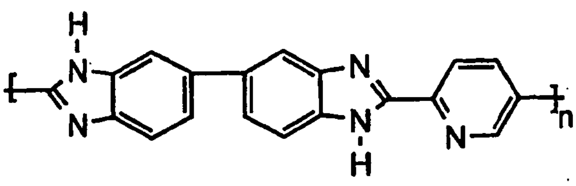

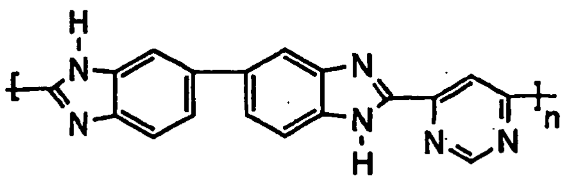

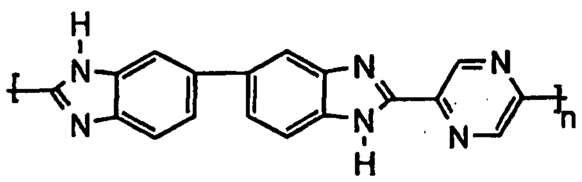

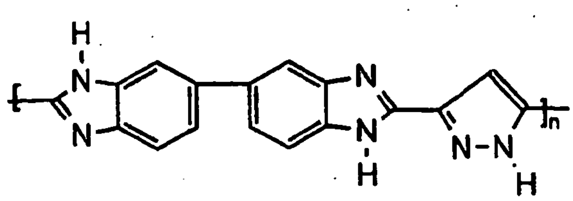

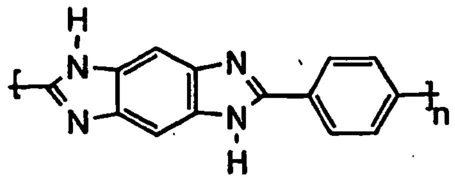

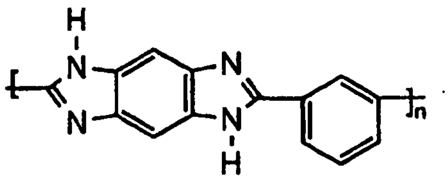

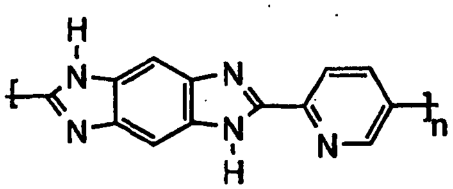

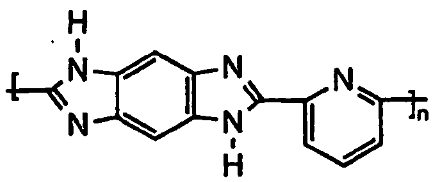

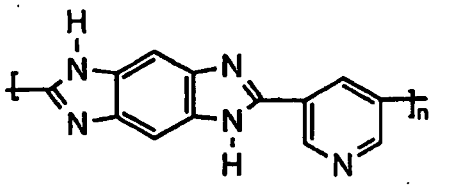

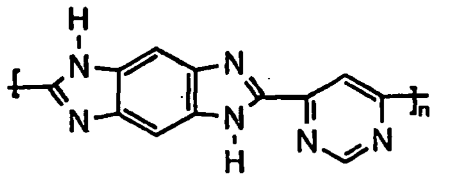

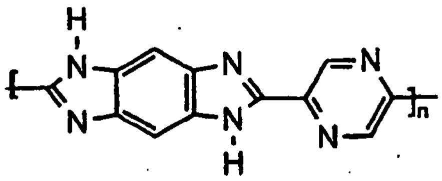

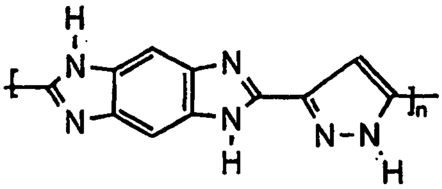

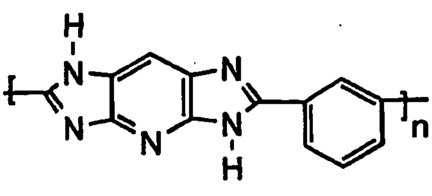

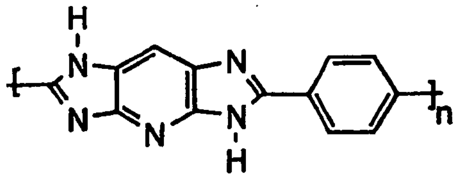

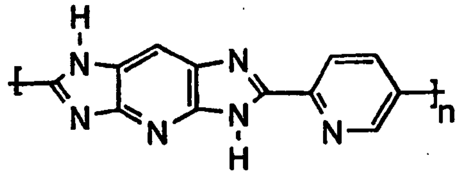

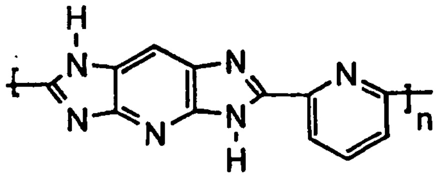

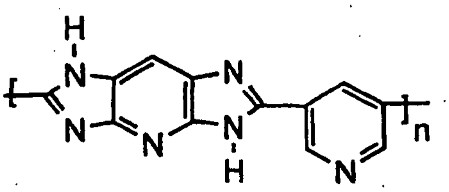

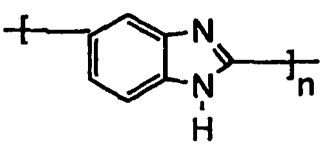

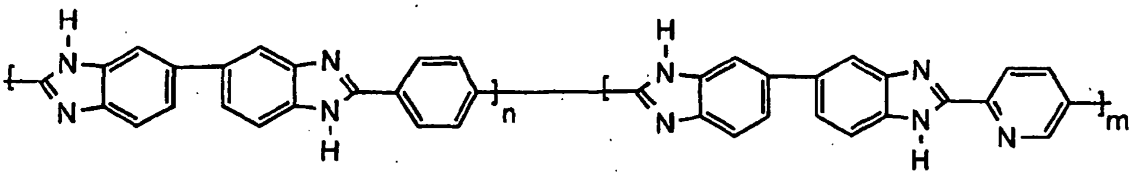

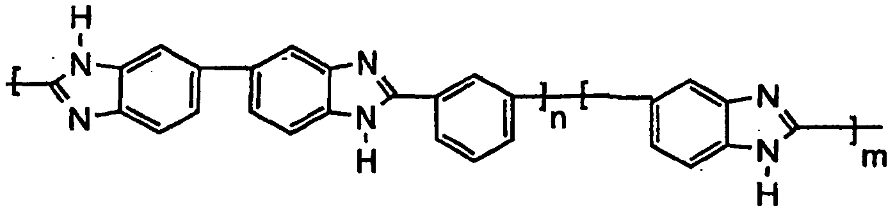

wobei n und m eine ganze Zahl größer gleich 10, vorzugsweise größer gleich 100 ist.

Die mittel des beschriebenen Verfahrens erhältlichen Polyazole, insbesondere jedoch die Polybenzimidazole zeichnen sich durch ein hohes Molekulargewicht aus. Gemessen als Intrinsische Viskosität beträgt diese mindestens 1,4 dl/g und liegt somit deutlich über dem von handelsüblichem Polybenzimidazol (IV < 1,1 dl/g).

Insofern die Mischung gemäß Schritt A) auch Tricarbonsäuren bzw. Tetracarbonsäre enthält wird hierdurch eine Verzweigung/ Vernetzung des gebildeten Polymeren erzielt. Diese trägt zur Verbesserung der mechanischen Eigenschaft bei.

Das Bildung der Polymermembran gemäß Schritt D) erfolgt mittels an sich bekannter Maßnahmen (Gießen, Sprühen, Rakeln) die aus dem Stand der Technik zur Polymerfilm-Herstellung bekannt sind. Als Träger sind alle unter den Bedingungen als inert zu bezeichnenden Träger geeignet. Zur Einstellung der Viskosität kann die Lösung gegebenenfalls mit Phosphorsäure (konz. Phosphorsäure, 85%) versetzt werden. Hierdurch kann die Viskosität auf den gewünschten Wert eingestellt und die Bildung der Membran erleichtert werden. Die Dicke beträgt zwischen 20 und 4000μ m, vorzugsweise zwischen 30 und 3500 μm, insbesondere zwischen 50 und 3000 μm.

Behandlung der gemäß Schritt E) erzeugten Membran in Gegenwart von Feuchtigkeit bei Temperaturen und für eine Dauer ausreichend bis die Membran selbsttragend ist, so daß sie ohne Beschädigung vom Träger abgelöst werden kann.

Die Behandlung der Membran in Schritt E) erfolgt bei Temperaturen oberhalb 0°C und kleiner 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf bzw. und/oder wasserenthaltende Phosphorsäure von bis zu 85%. Die Behandlung erfolgt vorzugsweise unter Normaldruck, kann aber auch unter Einwirkung von Druck erfolgen. Wesentlich ist, daß die Behandlung in Gegenwart von ausreichender Feuchtigkeit geschieht, wodurch die anwesende Polyphosphorsäure durch partielle Hydrolyse unter Ausbildung niedermolekularer Polyphosphorsäure und/ oder Phosphorsäure zur Verfestigung der Membran beiträgt.

Die partielle Hydrolyse der Polyphosphorsäure in Schritt E) führt zu einer Verfestigung der Membran und zu einer Abnahme der Schichtdicke und Ausbildung einer Membran mit einer Dicke zwischen 15 und 3000 μm, vorzugsweise zwischen 20 und 2000 μm, insbesondere zwischen 20 und 1500 μm, die selbsttragend ist. Die in der Polyphosphorsäureschicht vorliegenden intra- und intermolekularen Strukturen (Interpenetrierende Netzwerke IPN) führen zu einer geordneten Membranbildung, welche für die besonderen Eigenschaften der gebildeten Membran verantwortlich zeichnet.

Die obere Temperaturgrenze der Behandlung gemäß Schritt E) beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die partielle Hydrolyse (Schritt E) kann auch in Klimakammern erfolgen bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung beispielsweise Gase wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die partielle Hydrolyse bei Raumtemperatur (20°C) mit Umgebungsluft einer relativen Luftfeuchtigkeit von 40-80% durchgeführt beträgt die Behandlungsdauer zwischen 1 und 200 Stunden.

Die gemäß Schritt E) erhaltene Membran ist selbsttragend ausgebildet, d.h. sie kann vom Träger ohne Beschädigung gelöst und anschließend gegebenenfalls direkt weiterverarbeitet werden.

Über den Grad der Hydrolyse, d.h. die Dauer, Temperatur und Umgebungsfeuchtigkeit, ist die Konzentration an Phosphorsäure und damit die Leitfähigkeit der erfindungsgemäßen Polymermembran einstellbar. Erfindungsgemäß wird die Konzentration der Phosphorsäure als Mol Säure pro Mol Wiederholungseinheit des Polymers angegeben. Im

Rahmen der vorliegenden Erfindung ist eine Konzentration (Mol Phosporsäure bezogen auf eine Wiederholeinheit Polybenzimidazol) zwischen 10 und 50, insbesondere zwischen 12 und 40, bevorzugt. Derartig hohe Dotierungsgrade (Konzentrationen) sind durch Dotieren von Polyazolen mit kommerziell erhältlicher ortho-Phosphorsäure nur sehr schwierig bzw. gar nicht zugänglich.

Im Anschluß an die Behandlung gemäß Schritt E) kann die Membran durch Einwirken von Hitze in Gegenwart von Luftsauerstoff an der Oberfläche noch vernetzt werden. Diese Härtung der Membranoberfläche verbessert die Eigenschaften der Membran zusätzlich.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit β-Strahlen. Die Strahlungsdosis beträgt hierbei zwischen 5 und 200 kGy.

Die erfindungsgemäße Polymermembran weist verbesserte Materialeigenschaften gegenüber den bisher bekannten dotierten Polymermembranen auf. Insbesondere zeigen sie im Vergleich mit bekannten dotierten Polymermembranen bessere Leistungen. Diese begründet sich insbesondere durch eine verbesserte Protonenleitfähigkeit. Diese beträgt bei Temperaturen von 120°C mindestens 0,1 S/cm, vorzugsweise mindestens 0,11 S/cm, insbesondere mindestens 0,12 S/cm.

Zur weiteren Verbesserung der anwendungstechnischen Eigenschaften können der Membran zusätzlich noch Füllstoffe, insbesondere protonenleitende Füllstoffe, sowie zusätzliche Säuren zugesetzt werden. Die Zugabe kann entweder bei Schritt B), C) oder vor Schritt D) erfolgen.

Nicht limitierende Beispiele für Protonenleitende Füllstoffe sind

| | |
|---|---|
| Sulfate wie: | $CsHSO_4$, $Fe(SO_4)_2$, $(NH_4)_3H(SO_4)_2$, $LiHSO_4$, $NaHSO_4$, $KHSO_4$, $RbSO_4$, $LiN_2H_5SO_4$, $NH_4HSO_4$, |
| Phosphate wie | $Zr_3(PO_4)_4$, $Zr(HPO_4)_2$, $HZr_2(PO_4)_3$, $UO_2PO_4.3H_2O$, $H_8UO_2PO_4$, $Ce(HPO_4)_2$, $Ti(HPO_4)_2$, $KH_2PO_4$, $NaH_2PO_4$, $LiH_2PO_4$, $NH_4H_2PO_4$, $CsH_2PO_4$, $CaHPO_4$, $MgHPO_4$, $HSbP_2O_8$, $HSb_3P_2O_{14}$, $H_5Sb_5P_2O_{20}$, |
| Polysäure wie | $H_3PW_{12}O_{40}.nH_2O$ (n=21-29), $H_3SiW_{12}O_{40}.nH_2O$ (n=21-29), $H_xWO_3$, $HSbWO_6$, $H_3PMO_{12}O_{40}$, $H_2Sb_4O_{11}$, $HTaWO_6$, $HNbO_3$, $HTiNbO_5$, $HTiTaO_5$, $HSbTeO_6$, $H_5Ti_4O_9$, $HSbO_3$, $H_2MoO_4$ |
| Selenite und Arsenide wie | $(NH_4)_3H(SeO_4)_2$, $UO_2AsO_4$, $(NH_4)_3H(SeO_4)_2$, $KH_2AsO_4$, $Cs_3H(SeO_4)_2$, $Rb_3H(SeO_4)_2$, |
| Oxide wie | $Al_2O_3$, $Sb_2O_5$, $ThO_2$, $SnO_2$, $ZrO_2$, $MoO_3$ |
| Silikate wie | Zeolithe, Zeolithe($NH_4$+), Schichtsilikate, Gerüstsilikate, H-Natrolite, H-Mordenite, $NH_4$-Analcine, $NH_4$-Sodalite, $NH_4$-Gallate, H-Montmorillonite |
| Säuren wie | $HClO_4$, $SbF_5$ |
| Füllstoffe wie | Carbide, insbesondere SiC, $Si_3N_4$, Fasern, insbesondere Glasfasern und/oder Polymerfasern, bevorzugt auf Basis von Polyazolen. |

Als weiteres kann diese Membran auch perfluorierte Sulfonsäure Additive (0,1-20 wt%, bevorzugt 0,2-15 wt%, ganz bevorzugt 0,2-10 wt%) enthalten. Diese Additive führen zur Leistungsverbesserung, in der Nähe der Kathode zur Erhöhung der Sauerstofflöslichkeit und Sauerstoffdiffusion und zur Verringerung der Adsorbtion von Phosphorsäure und Phosphat zu Platin. (Electrolyte additives for phosphoric acid fuel cells. Gang, Xiao; Hjuler, H. A.; Olsen, C.; Berg, R. W.; Bjerrum, N. J.. Chem. Dep. A, Tech. Univ. Denmark, Lyngby, Den. J. Electrochem. Soc. (1993), 140(4), 896-902 und Perfluorosulfonimide as an additive in phosphoric acid fuel cell. Razaq, M.; Razaq, A.; Yeager, E.; DesMarteau, Darryl D.; Singh, S. Case Cent. Electrochem. Sci., Case West. Reserve Univ., Cleveland, OH, USA. J. Electrochem. Soc. (1989), 136(2), 385-90.)

Nicht limitierende Beispiele für persulfonierte Additive sind:

Trifluomethansulfonsäure, Kaliumtrifluormethansulfonat, Natriumtrifluormethansulfonat, Lithiumtrifluormethansulfonat, Ammoniumtrifluormethansulfonat, Kaliumperfluorohexansulfonat, Natriumperfluorohexansulfonat, Lithiumperfluorohexansulfonat, Ammoniumperfluorohexansulfonat, Perfluorohexansulfonsäure, Kaliumnonafluorbutansulfonat, Natriumnonafluorbutansulfonat, Lithiumnonafluorbutansulfonat, Ammoniumnonafluorbutansulfonat, Cäsiumnonafluorbutansulfonat, Triethylammoniumperfluorohexasulfonat, Perflurosulfoimide und Nafion.

Als weiteres kann die Membran auch als Additive enthalten, die die im Betrieb bei der Sauerstoffreduktion erzeugten Peroxidradikale abfangen (primäre Anitoxidanzien) oder zerstören (sekundäre Antioxidanzien) und dadurch wie in JP2001118591 A2 beschrieben Lebensdauer und Stabilität der Membran und Membranelektrodeneinheit verbessern. Die Funktionsweise und molekularen Strukturen solcher Additive sind in F. Gugumus in Plastics Additives, Hanser Verlag, 1990; N.S. Allen, M. Edge Fundamentals of Polymer Degradation and Stability, Elsevier, 1992; oder H. Zweifel, Stabilization of Polymeric Materials, Springer, 1998 beschrieben.
Nicht limitierende Beispiele für solche Additive sind:

Bis(trifluormethyl)nitroxid, 2,2-Diphenyl-1-pikrinylhydrazyl, Phenole, Alkylphenole, sterisch gehinderte Alkylphenole wie zum Beispiel Irganox, aromatische Amine, sterisch gehinderte Amine wie zum Beispiel Chimassorb; sterisch gehinderte Hydroxylamine, sterisch gehinderte Alkylamine, sterisch gehinderte Hydroxylamine, sterisch gehinderte Hydroxylaminether, Phosphite wie zum Beispiel Irgafos, Nitrosobenzol, Methyl.2-nitroso-propan, Benzophenon, Benzaldehyd-tert.-butylnitron, Cysteamin, Melanine, Bleioxide, Manganoxide, Nickeloxide, Cobaltoxide.

Zu möglichen Einsatzgebieten der erfindungsgemäßen, dotierten Polymermembranen gehören unter anderem die Verwendung in Brennstoffzellen, bei der Elektrolyse, in Kondensatoren und in Batteriesystemen. Aufgrund ihres Eigenschaftsprofils werden die dotierten Polymermembranen vorzugsweise in Brennstoffzellen verwendet.
Die vorliegende Erfindung betrifft auch eine Membran-Elektroden-Einheit, die mindestens eine erfindungsgemäße Polymermembran aufweist. Für weitere Informationen über Membran-Elektroden-Einheiten wird auf die Fachliteratur, insbesondere auf die Patente US-A-4,191,618, US-A-4,212,714 und US-A-4,333,805 verwiesen. Die in den vorstehend genannten Literaturstellen [US-A-4,191,618, US-A-4,212,714 und US-A-4,333,805] enthaltene Offenbarung hinsichtlich des Aufbaues und der Herstellung von Membran-Elektroden-Einheiten, sowie der zu wählenden Elektroden , Gasdiffusionslagen und Katalysatoren ist auch Bestandteil der Beschreibung.
In einer Variante der vorliegenden Erfindung kann die Membranbildung anstellle auf einem Träger auch direkt auf der Elektrode erfolgen. Die Behandlung gemäß Schritt E) kann hierdurch entsprechend verkürzt werden, da die Membran nicht mehr selbsttragend sein muß. Auch eine solche Membran ist Gegenstand der vorliegenden Erfindung.
Ein weiterer Gegenstand der vorliegenden Erfindung ist eine Elektrode die mit einer protonenleitenden Polymerbeschichtung auf Basis von Polyazolen erhältlich durch ein Verfahren umfassend die Schritte

A) Umsetzung von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 350°C, vorzugsweise bis zu 300°C,,
B) Lösen des gemäß Schritt A) erhaltenen festen Prä-Polymeren in Polyphosphorsäure,
C) Erwärmen der Lösung erhältlich gemäß Schritt B) unter Inertgas auf Temperaturen von bis zu 300°C, vorzugsweise 280°C unter Ausbildung des gelösten Polyazol-Polymeren [
D) Aufbringen einer Schicht unter Verwendung der Lösung des Polyazol-Polymeren gemäß Schritt C) auf einer Elektrode und
E) Behandlung der in Schritt D) gebildeten Schicht in Gegenwart von Feuchtigkeit.

Die Beschichtung hat eine Dicke zwischen 2 und 3000 μm, vorzugsweise zwischen 3 und 2000 μm, insbesondere zwischen 5 und 1500 μm.
Eine derartig beschichtete Elektrode kann in einer Membran-Elektroden-Einheit, die gegebenenfalls mindestens eine erfindungsgemäße Polymermembran aufweist, eingebaut werden.
Allgemeine Messmethoden:
Messmethode für IEC
Die Leitfähigkeit der Membran hängt stark vom Gehalt an Säuregruppen ausgedrückt durch die sog. Ionenaustauschkapazität (IEC) ab. Zur Messung der Ionenaustauschkapazität wird eine Probe mit einem Durchmesser von 3 cm ausgestanzt und in ein mit 100 ml Wasser gefülltes Becherglas gegeben. Die freigesetzte Säure wird mit 0,1 M NaOH titriert. Anschliessend wird die Probe entnommen, überschüssiges Wasser abgetupft und die Probe bei 160°C während 4h getrocknet. Dann bestimmt man das Trockengewicht, $m_0$, gravimetrisch mit einer Genauigkeit von 0,1 mg. Die Ionenaustauschkapazhät wird dann aus dem Verbrauch der 0,1 M NaOH bis zum ersten Titratiönsendpunkt, $V_1$ in ml, und dem Trockengewicht, mo in mg, gemäss folgender Formel berechnet:

$$IEC=V_1*300/m_0$$

Messmethode für spezifische Leitfähigkeit

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines ohm'schen Widerstandes und eines Kapazitators ausgewertet. Der Probenquerschnitf der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-100 Thermoelement geregelt. Nach Erreichen der Temperatur wird die Probe vor dem Start der Messung 10 Minuten auf dieser Temperatur gehalten

Nachfolgend wird die Erfindung durch Beispiele und Vergleichsbeispiel eingehender erläutert, ohne daß die Erfindung auf diese Beispiele beschränkt werden soll.

**BEISPIELE**

**Probe 1**

10 g Präpolymer wurde unter Stickstoffatmosphäre in einem Dreihalskolben vorgelegt, der mit einem mechanischen Rühren, N2-Einlaß und Auslaß ausgestattet wurde. Zum Präpolymer wurde 90 g Polyphosphorsäure (83,4 ± 0.5% $P_2O_5$ der Gehalt wurde analytisch bestimmt.) gegeben. Die Mischung wurde zuerst auf 150°C erhitzt und 1 h gerührt. Die Temperatur wurde dann auf 180°C für 4h, danach auf 240°C für 4h schließlich auf 270°C für 14h erhöht. Bei 270°C wurde zu dieser Lösung 25 g 85%-ige Phosphorsäure gegeben und 1 h gerührt. Die erhaltene Lösung wurde dann auf 225 °C abgekühlt, um eine noch fließende Lösung für Filmgießen zu erhalten. Diese warme Lösung wurde auf eine Glasplatte mit einem 350 μm Rakelrahmen gerakelt, wobei der Rakelrahmen und die Glasplatte vorher auf 100°C geheizt wurden. Die Membran wurde an der Luft bei Raumtemperatur (RT=20°C) 3 Tage lang stehengelassen. Die Polyphosphorsäure entzog die Feuchtigkeit aus der Luft und wurde von der Luft absorbierte Feuchtigkeit zu Phoshorsäure hydrolysiert. Die entstandene überschüssige Phosphorsäure floß aus der Membran. Der Gewichtsverlust war 22% bezogen auf das Anfangsgewicht der gerakelten Membran. Ein Teil der Lösung wurde nach der Temperaturbehandlung durch Mischen mit destilliertem Wasser ausgefallen, gefiltert, dreimal mit destilliertem Wasser gewaschen, mit Ammonuimhydroxid neutralisiert, dann dreimal mit destilliertem. Wasser gewaschen und schließlich bei 120°C 16h lang bei 1 Torr getrocknet.

Es wurden 2,9 g PBI-Pulver mit ηinh 1,47 dUg wurde erhalten, welche aus einer 0,4%-ige PBI-Lösung in 100 ml in konz. Schwefelsäure (97%) gemessen wurde.

**Probe 2**

10 g Präpolymer wurde unter Stickstoffatmosphäre in einem Dreihalskolben vorgelegt, der mit einem mechanischen Rührer , N2-Einlaß und Auslas ausgestattet wurde. Zum Präpolymer wurde 90 g Polyphosphorsäure (83,4 ± 0.5% $P_2O_5$ der Gehalt wurde analytisch bestimmt.) gegeben. Die Mischung wurde zuerst auf 150°C erhitzt und 1 h gerührt. Die Temperatur wurde dann auf 180°C für 4h (Stunden), danach auf 240°C für 4h schließlich auf 270°C für 14h erhöht. Bei 270°C wurde zu dieser Lösung 25 g 85%-ige Phosphorsäure gegeben und 1 h gerührt. Die erhaltene Lösung wurde dann auf 240 °C abgekühlt, um eine noch fließende homogene Lösung für Filmgießen zu erhalten. Diese warme Lösung wurde auf eine Glasplatte mit einem 350 μm, 700 μm, 930 μm und 1170 μm Rakelrahmen gerakelt, wobei der Rakelrahmen und die Glasplatte vorher auf 100°C geheizt wurden. Die Membran wurde an der Luft bei RT 5d (Tage) lang stehengelassen. Die Polyphosphorsäure entzog die Feuchtigkeit aus der Luft und wurde von der Luft absorbierte Feuchtigkeit zu Phosphorsäure hydrolysiert. Die entstandene überschüssige Phosphorsäure floß aus der Membran. Die Gewichtsverluste von Membranen lagen zwischen 37,5-40% bezogen auf das Anfangsgewicht der gerakelten Membran. Die Enddicke von Membranen waren 210 μm, 376 μm, 551 μm und 629 μm.

Ein Teil der Lösung wurde nach der Temperaturbehandlung durch Mischen mit destilliertem Wasser ausgefallen, gefiltert, dreimal mit destilliertem. Wasser gewaschen, mit Ammonuimhydroxid neutralisiert, dann dreimal mit destilliertem. Wasser gewaschen und schließlich bei 120°C 16h lang bei 1 Torr getrocknet. Für PBI-Pulver wurde eine inhärente Viskosität von ηinh 2.23 dL/g erhalten, welche aus einer 0,4%-ige PBI-Lösung in 100 ml in konz. Schwefelsäure (97%) gemessen wurde.

**Probe 3**

10 g Präpolymer wurde unter Stickstoffatmosphäre in einem Dreihalskolben vorgelegt, der mit einem mechanischen Rührer, N2-Einlaß und Auslas ausgestattet wurde. Zum Präpolymer wurde 90 g Polyphosphorsäure (83,4 ±

0.5% $P_2O_5$ der Gehalt wurde analytisch bestimmt.) gegeben. Die Mischung wurde zuerst auf 150°C erhitzt und 1 h gerührt. Die Temperatur wurde dann auf 180°C für 4h, danach auf 240°C für 4h schließlich auf 270°C für 14h erhöht. Bei 270°C wurde zu dieser Lösung 25 g 85%-ige Phosphorsäure gegeben und 1h gerührt. Die erhaltene Lösung wurde dann auf 240 °C abgekühlt, um eine noch fließende homogene Lösung für Filmgießen zu erhalten. Die 6,5 %-ige warme PBI-Lösung in 104 %-ige Polyphosphorsäure wurde bei 200 °C auf eine Glasplatte mit einem 350 μm, 230 μm, 190 μm und 93 μm Rakelrahmen gerakelt, wobei der Rakelrahmen und die Glasplatte vorher auf 100°C geheizt wurden. Die Membran wurde an der Luft bei RT 7 d lang stehengelassen. Die Polyphosphorsäure entzog die Feuchtigkeit aus der Luft und wurde von der Luft absorbierte Feuchtigkeit zu Phoshorsäure hydrolysiert. Die entstandene überschüssige Phosphorsäure floß aus der Membran. Die Enddicke von Membranen waren 201 μm, 152 μm, 126 μm und 34 μm.

Ein Teil der Lösung wurde nach der Temperaturbehandlung durch Mischen mit destilliertem Wasser ausgefallen, gefiltert, dreimal mit destilliertem. Wasser gewaschen, mit Ammonuimhydroxid neutralisiert, dann dreimal mit destilliertem. Wasser gewaschen und schließlich bei 120°C 16h lang bei 1 Torr getrocknet. Für PBI-Pulver wurde eine inhärente Viskosität von ηinh 2.6 dUg erhalten, welche aus einer 0,4%-ige PBI-Lösung in 100 ml in konz. Schwefelsäure (97%) gemessen wurde.

In der Tabelle 1 sind die Ionenaustauschkapaitäten und n(H3PO4)/n(PBI)-Werte von Probe 1-3 mit Referenzprobe verglichen. Diese Werte sind durch Titration mit 0,1 M NaOH erhalten.

Tabelle 1: Vergleich lonenaustauschkapazitäten und n($H_3PO_4$)/n(PBI)-Werte

| Bezeichnung der Membran | n(H3PO4)/n(PBI) | I.E.C. |
|---|---|---|
| **Probe 1** | 16,2 | 157,6 |
| **Probe 2** | 15,0 | 145,6 |
| **Probe 3** | 18,7 | 182,6 |
| **Referenzprobe zum Vergleich** | 9,1 | 88,5 |

In Fig. 1 sind die temperaturabhängige Leitfähigkeiten von Probe 1, Probe 2 und Refernzprobe dargestellt. Die temperaturabhängige Leitfähigkeitsmessung wurde mit einer spezial gefertigten 4-Pol-Glasmesszelle gemessen. Als Impedanzspektrometer wurde IM6 von Zahner Elektrik verwendet.

## Patentansprüche

1. Protonenleitende Polymermembran auf Basis von Polyazolen erhältlich durch ein Verfahren umfassend die Schritte

   A) Umsetzung von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 350°C, vorzugsweise bis zu 300°C,
   B) Lösen des gemäß Schritt A) erhaltenen festen Prä-Polymeren in Polyphosphorsäure,
   C) Erwärmen der Lösung erhältlich gemäß Schritt B) unter Inertgas auf Temperaturen von bis zu 300°C, vorzugsweise 280°C unter Ausbildung des gelösten Polyazol-Polymeren
   D) Bilden einer Membran unter Verwendung der Lösung des Polyazol-Polymeren gemäß Schritt C) auf einem Träger und
   E) Behandlung der in Schritt D) gebildeten Membran in Gegenwart von Feuchtigkeit bei Temperaturen und für eine Dauer ausreichend bis diese selbsttragend ist.

2. Membran gemäß Anspruch 1, **dadurch gekennzeichnet, daß** als aromatische Tetra-Amino-Verbindungen 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethän eingesetzt werden.

3. Membran gemäß Anspruch 1, **dadurch gekennzeichnet, daß** als aromatische Dicarbonsäuren Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,5-Dihydroxyisophthalsäure, 2,3-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure,

Tetrafluorophthalsäure, Tetrafluoroisophthalsäure, Tetrafluoroterephthalsäure, 1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl) hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride eingesetzt werden.

4. Membran gemäß Anspruch 1, **dadurch gekennzeichnet, daß** als aromatische Carbonsäure Tri-carbonsäuren, Tetracarbonsäuren bzw. deren C1-C20-Alkyl-Ester oder C5-C12-Aryl-Ester oder deren Säureanhydride oder deren Säurechloride, vorzugsweise 1,3,5-benzene-tricarboxylic acid (trimesic acid); 1,2,4-benzene-tricarboxylic acid (trimellitic acid); (2-Carboxyphenyl)iminodiessigsäure, 3,5,3'-biphenyltricarboxylic acid; 3,5,4'-biphenyltricarboxylic acid und/oder 2,4,6-pyridinetricarboxylic acid eingesetzt werden.

5. Membran gemäß Anspruch 1, **dadurch gekennzeichnet, daß** als aromatische Carbonsäure Tetracarbonsäuren deren C1-C20-Alkyl-Ester oder C5-C12-Aryl-Ester oder deren Säureanhydride oder deren Säurechloride, vorzugsweise Benzol-1,2,4,5-tetracarbonsäure; Naphthalin-1,4,5,8-tetracarbonsäure 3,5,3',5'-biphenyltetracarboxylic acid; Benzophenontetracarbonsäure, 3,3',4,4'-Biphenyltetracarbonsäure, 2,2',3,3'-Blphenyltetracarbonsäure, 1,2,5,6-Naphthalintetracarbonsäure, 1,4,5,8-Naphthalintetracarbonsäure eingesetzt werden.

6. Membran gemäß Anspruch 4, **dadurch gekennzeichnet, daß** der Gehalt an Tri-carbonsäure bzw. Tetracarbonsäuren (bezogen auf eingesetzte Dicarbonsäure) zwischen 0 und 30 Mol-%, vorzugsweise 0,1 und 20 Mol %, insbesondere 0.5 und 10 Mol-%. beträgt.

7. Membran gemäß Anspruch 1, **dadurch gekennzeichnet, daß** als heteroaromatische Carbonsäuren heteroaromatische Di-carbonsäuren und Tri-carbonsäuren und Tetra-Carbonsäuren eingesetzt werden, welche mindestens ein Stickstoff, Sauerstoff, Schwefel oder Phosphoratom im Aromaten enthalten, vorzugsweise Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6-Pyrimidindicarbonsäure,2,5-Pyrazindicarbonsäure, 2,4,6-Pyridintricarbonsäure, sowie deren C1-C20-Alkyl-Ester oder C5-C12-Aryl-Ester, oder deren Säureanhydride oder deren Säurechloride.

8. Membran gemäß Anspruch 1, **dadurch gekennzeichnet, daß** in Schritt B) eine Polyphosphorsäure mit einem Gehalt berechnet als $P_2O_5$ (acidimetrisch) von mindestens 85% eingesetzt wird.

9. Membran gemäß Anspruch 1, **dadurch gekennzeichnet, daß** in Schritt B) anstelle einer Lösung des Präpolymeren eine Dispersion/Suspension erzeugt wird.

10. Membran gemäß Anspruch 1, **dadurch gekennzeichnet, daß** in Schritt C) ein Polymer auf Basis von Polyazol enthaltend wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVII) und/oder (XVIII) und/oder (XIX) und/oder (XX) und/oder (XXI) und/oder (XXII)

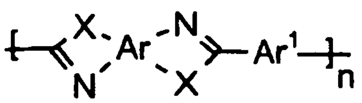

(I)

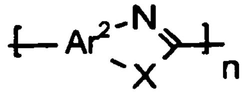

(II)

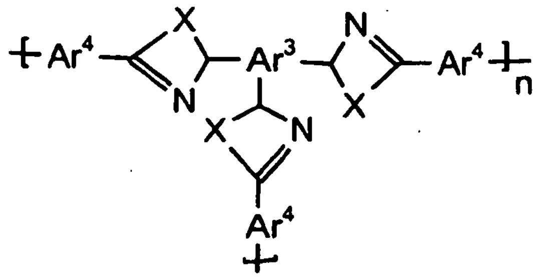

(III)

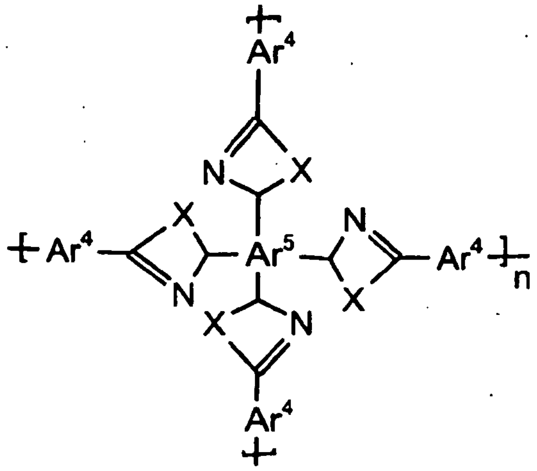

(IV)

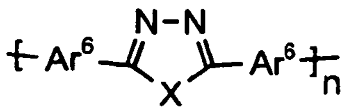

(V)

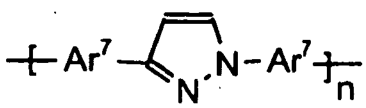

(VI)

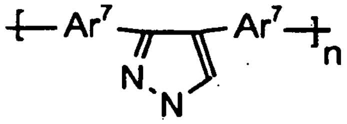

(VII)

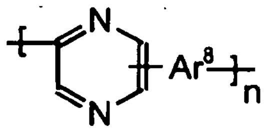

(VIII)

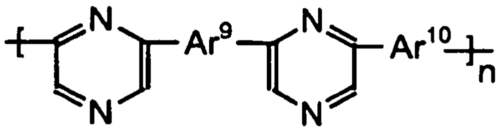

(IX)

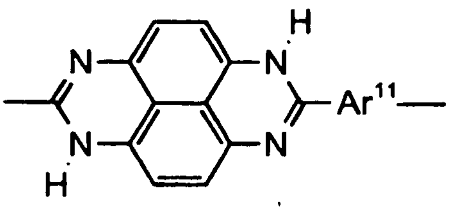

(X)

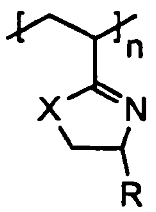

(XI)

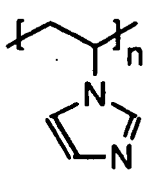

(XII)

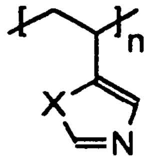
(XIII)

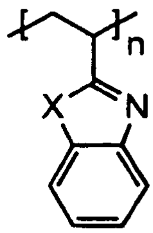
(XIV)

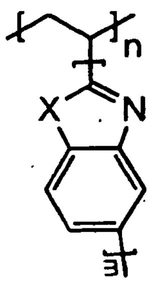
(XV)

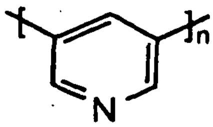
(XVI)

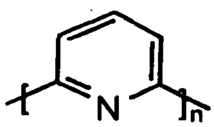
(XVII)

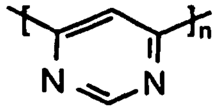

(XVIII)

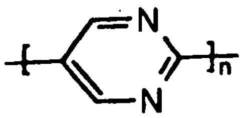

(XIX)

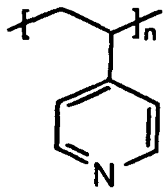

(XXI)

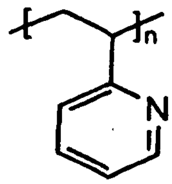

(XXII)

worin

Ar gleich oder verschieden sind und für eine vierbindige aromatische oder hete- roaromatische Gruppe, die ein- oder mehrkernig sein kann,
$Ar^1$ gleich oder verschieden sind und für eine zweibindige aromatische oder he- teroaromatische Gruppe, die ein- oder mehrkernig sein kann,
$Ar^2$ gleich oder verschieden sind und für eine zwei oder dreibindige aromatische oder heteroaromatische Gruppe, die ein- oder mehrkernig sein kann,
$Ar^3$ gleich oder verschieden sind und für eine dreibindige aromatische oder hete- roaromatische Gruppe, die ein- oder mehrkernig sein kann,
$Ar^4$ gleich oder verschieden sind und für eine dreibindige aromatische oder hete- roaromatische Gruppe, die ein- oder mehrkernig sein kann,
$Ar^5$ gleich oder verschieden sind und für eine vierbindige aromatische oder hete- roaromatische Gruppe, die ein- oder mehrkernig sein kann,
$Ar^6$ gleich oder verschieden sind und für eine zweibindige aromatische oder he- teroaromatische Gruppe, die ein- oder mehrkernig sein kann,
$Ar^7$ gleich oder verschieden sind und für eine zweibindige aromatische oder he- teroaromatische Gruppe, die ein- oder mehrkernig sein kann,
$Ar^8$ gleich oder verschieden sind und für eine dreibindige aromatische oder hete- roaromatische Gruppe, die ein- oder mehrkernig sein kann,
$Ar^9$ gleich oder verschieden sind und für eine zwei- oder drei- oder vierbindige aromatische oder heteroaromatische Gruppe, die ein- oder mehrkernig sein kann,
$Ar^{10}$ gleich oder verschieden sind und für eine zwei- oder dreibindige aromatische oder heteroaromatische

Gruppe, die ein- oder mehrkernig sein kann,
$Ar^{11}$ gleich oder verschieden sind und für eine zweibindige aromatische oder he- teroaromatische Gruppe, die ein- oder mehrkernig sein kann,
X gleich oder verschieden ist und für Sauerstoff, Schwefel oder eine Ami- nogruppe, die ein Wasserstoffatom, eine 1- 20 Kohlenstoffatome aufweisen- de Gruppe, vorzugsweise eine verzweigte oder nicht verzweigte Alkyl- oder Alkoxygruppe, oder eine Arylgruppe als weiteren Rest trägt
R gleich oder verschieden für Wasserstoff, eine Alkylgruppe und eine aromati- sche Gruppe steht und
n, m eine ganze Zahl größer gleich 10, bevorzugt größer gleich 100 ist,

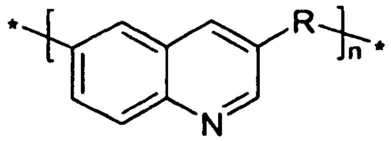
(XX)

worin

R gleich oder verschieden für eine Alkylgruppe und eine aromatische Gruppe steht und
n eine ganze Zahl größer gleich 10, bevorzugt größer gleich 100 ist,

gebildet wird.

11. Membran gemäß Anspruch 1, **dadurch gekennzeichnet, daß** in Schritt C) ein Polymer ausgewählt aus der Gruppe Polybenzimidazol, Poly(pyridine), Poly(pyrimidine), Polyimidazole, Polybenzthiazole, Polybenzoxazole, Polyoxadiazole, Polyquinoxalines, Polythiadiazole und Poly(tetrazapyrene) gebildet wird.

12. Membran gemäß Anspruch 1, **dadurch gekennzeichnet, daß** in Schritt C) ein Polymer enthaltend wiederkehrende Benzimidazoleinheiten der Formel

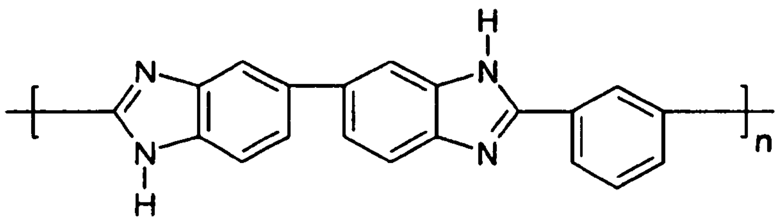

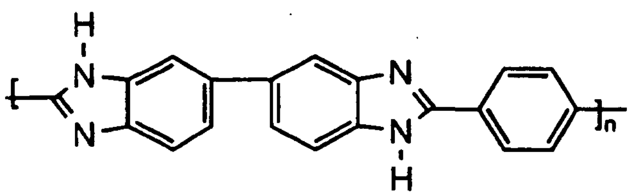

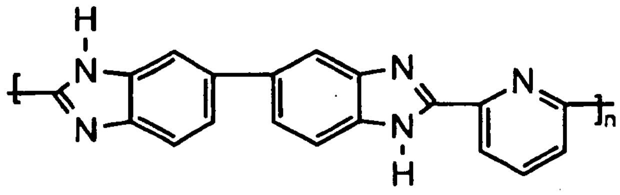

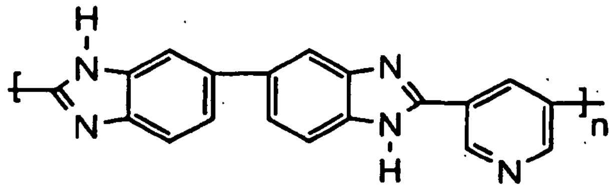

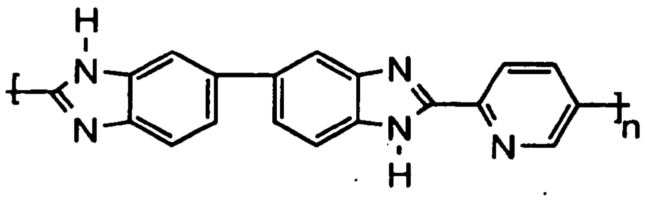

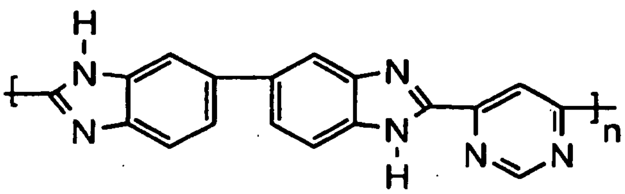

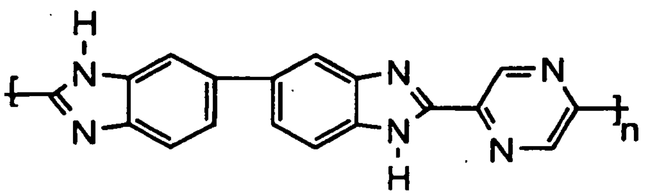

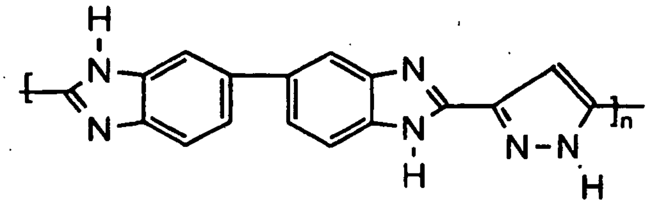

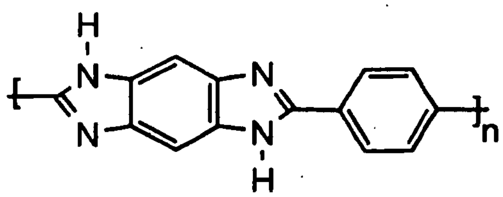

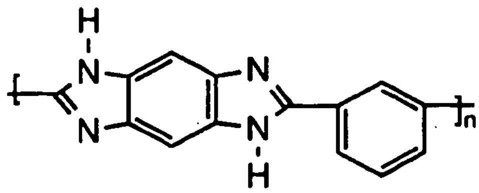

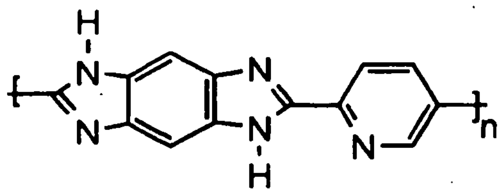

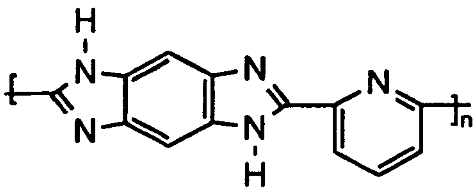

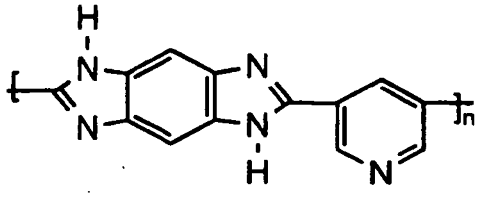

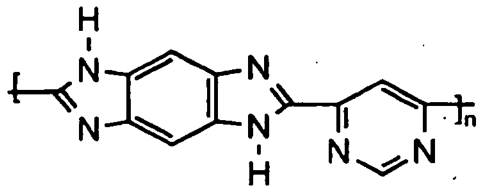

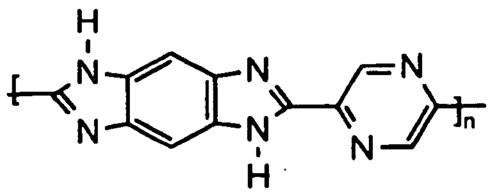

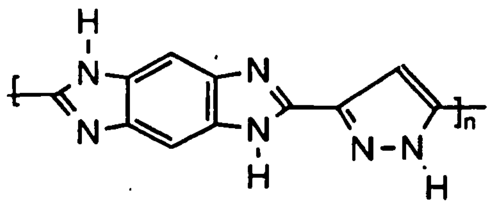

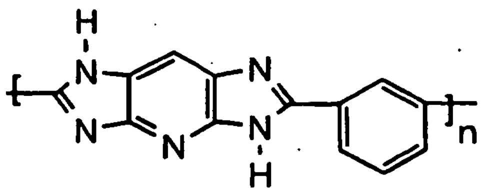

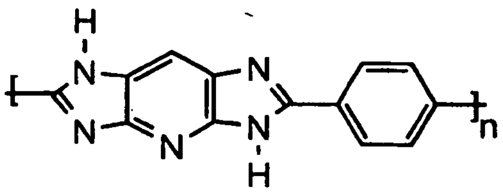

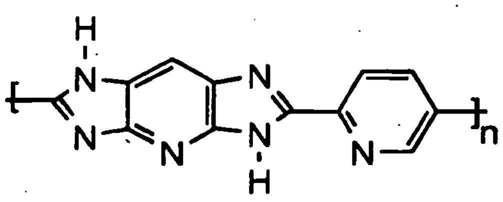

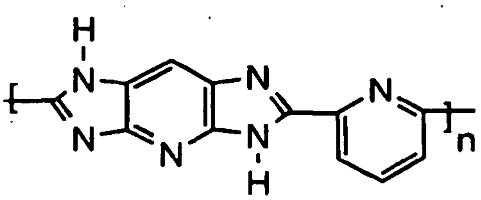

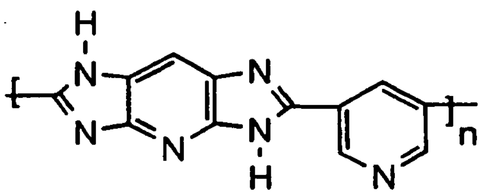

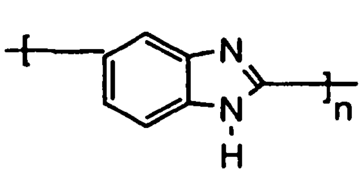

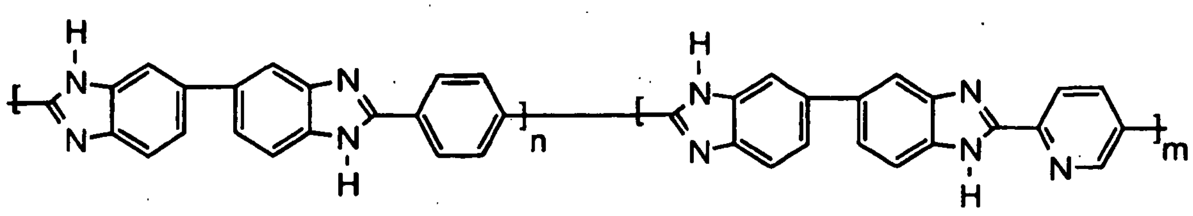

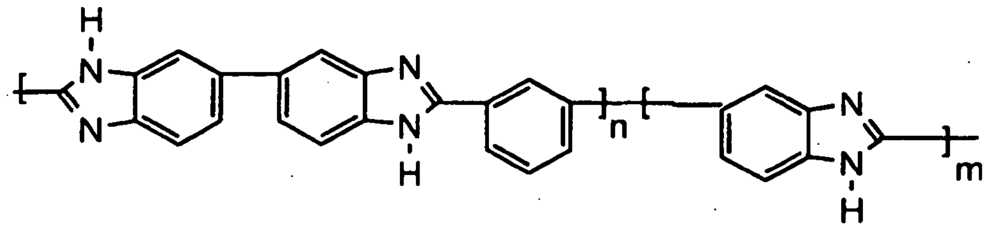

wobei n und m eine ganze Zahl größer gleich 10, vorzugsweise größer gleich 100 ist, gebildet wird.

**13.** Membran gemäß Anspruch 1, **dadurch gekennzeichnet, daß** nach Schritt C) und vor Schritt D) die Viskosität durch Zugabe von Phosphorsäure eingestellt wird.

**14.** Membran gemäß Anspruch 1, **dadurch gekennzeichnet, daß** die Behandlung der Membran in Schritt E) erfolgt bei Temperaturen oberhalb 0°C und 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf erfolgt.

**15.** Membran gemäß Anspruch 1, **dadurch gekennzeichnet, daß** die Behandlung der Membran in Schritt E) zwischen 10 Sekunden und 300 Stunden, vorzugsweise 1 Minute bis 200 Stunden, beträgt.

**16.** Membran gemäß Anspruch 1, **dadurch gekennzeichnet, daß** in Schritt D) als Träger eine Elektrode gewählt wird und die Behandlung gemäß Schritt E) dergestalt ist, daß die gebildete Membran nicht mehr selbsttragend ist.

**17.** Membran gemäß Anspruch 1, **dadurch gekennzeichnet, daß** die in Schritt D) gebildete Membran eine Dicke zwischen 20 und 4000 $\mu$m, vorzugsweise zwischen 30 und 3500 $\mu$m, insbesondere zwischen 50 und 3000 $\mu$m hat.

**18.** Membran gemäß Anspruch 1, **dadurch gekennzeichnet, daß** die in Schritt E) gebildete Membran eine Dicke zwischen 15 und 3000 $\mu$m, vorzugsweise zwischen 20 und 2000 $\mu$m, insbesondere zwischen 20 und 1500 $\mu$m, aufweist und selbsttragend ist.

**19.** Elektrode mit einer protonenleitenden Polymerbeschichtung auf Basis von Polyazolen erhältlich durch ein Verfahren umfassend die Schritte

A) Umsetzung von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 350°C, vorzugsweise bis zu 300°C,
B) Lösen des gemäß Schritt A) erhaltenen festen Prä-Polymeren in Polyphosphorsäure,
C) Erwärmen der Lösung erhältlich gemäß Schritt B) unter Inertgas auf Temperaturen von bis zu 300°C, vorzugsweise 280°C unter Ausbildung des gelösten Polyazol-Polymeren
D) Aufbringen einer Schicht unter Verwendung der Lösung des Polyazol-Polymeren gemäß Schritt C) auf einer Elektrode und
E) Behandlung der in Schritt D) gebildeten Schicht in Gegenwart von Feuchtigkeit.

**20.** Elektrode gemäß Anspruch 19, wobei die Beschichtung eine Dicke zwischen 2 und 3000 $\mu$m, vorzugsweise zwischen 3 und 2000 $\mu$m, insbesondere zwischen 5 und 1500 $\mu$m hat.

**21.** Membran-Elektroden-Einheit enthaltend mindestens eine Elektrode gemäß Anspruch 19 oder 20 und mindestens eine Membran gemäß einem oder mehreren der Ansprüche 1 bis 18.

**22.** Membran-Elektroden-Einheit enthaltend mindestens eine Elektrode und mindestens eine Membran gemäß einem oder mehreren der Ansprüche 1 bis 18.

**23.** Brennstoffzelle enthaltend eine oder mehrere Membran-Elektroden-Einheiten gemäß Anspruch 21 oder 22.

## Claims

**1.** A proton-conducting polymer membrane based on polyazoles which is obtainable by a method comprising the steps

A) Reaction of one or more aromatic tetraamino compounds with one or more aromatic carboxylic acids or esters thereof which contain at least two acid groups per carboxylic acid monomer, or of one or more aromatic and/or heteroaromatic diaminocarboxylic acids in the melt at temperatures of up to 350 °C, preferably up to 300 °C,
B) Dissolution of the solid prepolymer obtained according to step A) in polyphosphoric acid,
C) Heating of the solution obtainable according to step B) to temperatures of up to 300 °C, preferably up to 280 °C, under inert gas to form the dissolved polyazole polymer,
D) Formation of a membrane on a support using the solution of the polyazole polymer according to step C), and
E) Treatment of the membrane formed in step D) in the presence of moisture at temperatures and for a sufficient duration, until it is self-supporting.

**2.** The membrane according to claim 1, **characterized in that** 3,3',4,4'-tetraaminobiphenyl, 2,3,5,6-tetraaminopyridine, 1,2,4,5-tetraaminobenzene, 3,3',4,4'-tetraaminodiphenylsulfone, 3,3'4,4'-tetraaminodiphenylether, 3,3',4,4'-tetraaminobenzophenone, 3,3',4,4'-tetraaminodiphenylmethane and 3,3',4,4'-tetraaminodiphenyldimethylmethane are used as aromatic tetraamino compounds.

**3.** The membrane according to claim 1, **characterized in that** isophthalic acid, terephthalic acid, phthalic acid, 5-hydroxyisophthalic acid, 4-hydroxyisophthalic acid, 2-hydroxyterephthalic acid, 5-aminoisophthalic acid, 5-N,N-dimethylaminoisophthalic acid, 5-N,N-diethylaminoisophthalic acid, 2,5-dihydroxyterephthalic acid, 2,5-dihydroxyisophthalic acid, 2,3-dihydroxyisophthalic acid, 2,3-dihydroxyphthalic acid, 2,4-dihydroxyphthalic acid, 3,4-dihydroxyphthalic acid, 3-fluorophthalic acid, 5-fluoroisophthalic acid, 2-fluoroterephthalic acid, tetrafluorophthalic acid, tetrafluoroisophthalic acid, tetrafluoroterephthalic acid, 1,4-naphthalenedicarboxylic acid, 1,5-naphthalenedicarboxylic acid, 2,6-naphthalenedicarboxylic acid, 2,7-naphthalenedicarboxylic acid, diphenic acid, 1,8-dihydroxynaphthalene-3,6-dicarboxylic acid, diphenylether-4,4'-dicarboxylic acid, benzophenone-4,4'-dicarboxylic acid, diphenylsulfone-4,4'-dicarboxylic acid, biphenyl-4,4'-dicarboxylic acid, 4-trifluoromethylphthalic acid, 2,2-bis(4-carboxyphenyl)hexafluoropropane, 4,4'-stilbenedicarboxylic acid, 4-carboxycinnamic acid or their C1-C20 alkyl esters or C5-C12 aryl esters or their acid anhydrides or acid chlorides are used as aromatic dicarboxylic acids.

**4.** The membrane according to claim 1, **characterized in that** tricarboxylic acids, tetracarboxylic acids or their C1-C20 alkyl esters or C5-C12 aryl esters or their acid anhydrides or acid chlorides, preferably 1,3,5-benzene-tricarboxylic acid (trimesic acid), 1,2,4-benzenetricarboxylic acid (trimellitic acid), (2-carboxyphenyl)iminodiacetic acid, 3,5,3'-biphenyltricarboxylic acid, 3,5,4'-biphenyltricarboxylic acid and/or 2,4,6-pyridinetricarboxylic acid are used as aromatic carboxylic acids.

**5.** The membrane according to claim 1, **characterized in that** tetracarboxylic acids, their C1-C20 alkyl esters or C5-C12 aryl esters or their acid anhydrides or acid chlorides, preferably benzene-1,2,4,5-tetracarboxylic acid, naphthalene-1 ,4,5,8-tetracarboxylic acid, 3,5,3',5'-biphenyltetracarboxylic acid, benzophenonetetracarboxylic acid, 3,3',4,4'-biphenyltetracarboxylic acid, 2,2',3,3'-biphenyltetracarboxylic acid, 1,2,5,6-naphthalenetetracarboxylic acid, 1 , 4,5,8-naphthalenetetracarboxylic acid are used as aromatic carboxylic acids.

**6.** The membrane according to claim 4, **characterized in that** the content of tricarboxylic acids or tetracarboxylic acids (based on dicarboxylic acid used) is from 0 to 30 mol%, preferably from 0.1 to 20 mol%, in particular from 0.5 to 10 mol%.

**7.** The membrane according to claim 1, **characterized in that** heteroaromatic dicarboxylic acids and tricarboxylic

acids and tetracarboxylic acids which have at least one nitrogen, oxygen, sulfur or phosphorus atom in the aromatic, preferably pyridine-2,5-dicarboxylic acid, pyridine-3,5-dicarboxylic acid, pyridine-2,6-dicarboxylic acid, pyridine-2,4-dicarboxylic acid, 4-phenyl-2,5-pyridinedicarboxylic acid, 3,5-pyrazoledicarboxylic acid, 2,6-pyrimidinedicarboxylic acid, 2,5-pyrazinedicarboxylic acid, 2,4,6-pyridinetricarboxylic acid and also their C1-C20 alkyl esters or C5-C12 aryl esters or their acid anhydrides or acid chlorides are used as heteroaromatic carboxylic acids.

**8.** The membrane according to claim 1, **characterized in that** a polyphosphoric acid having content calculated as $P_2O_5$ (acidimetric) of at least 85% is used in step B).

**9.** The membrane according to claim 1, **characterized in that** a dispersion/suspension instead of a solution of the prepolymer is produced in step B).

**10.** The membrane according to claim 1, **characterized in that** a polymer is formed in step C) based on polyazole containing recurring azole units of the general formula (I) and/or (II) and/or (III) and/or (IV) and/or (V) and/or (VI) and/or (VII) and/or (VIII) and/or (IX) and/or (X) and/or (XI) and/or (XII) and/or (XIII) and/or (XIV) and/or (XV) and/or (XVI) and/or (XVII) and/or (XVIII) and/or (XIX) and/or (XX) and/or (XXI) and/or (XXII)

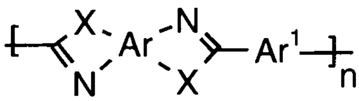

(I)

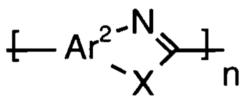

(II)

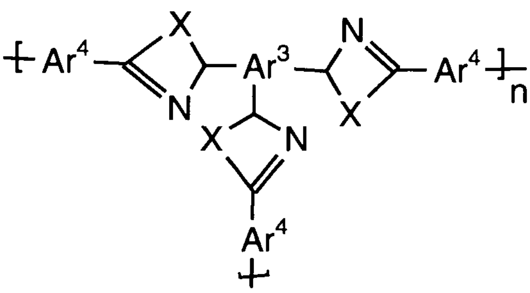

(III)

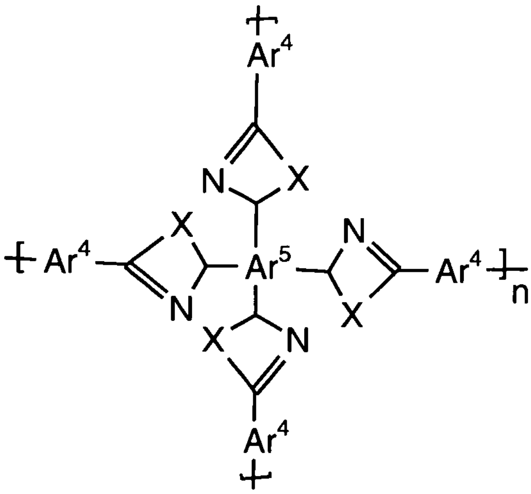

(IV)

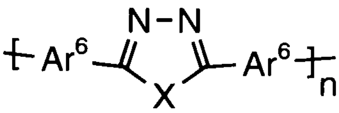

(V)

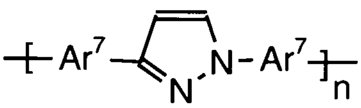

(VI)

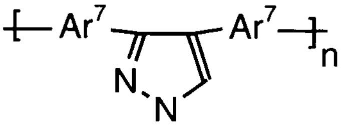

(VII)

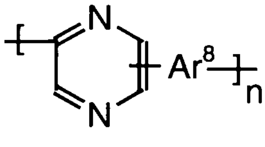

(VIII)

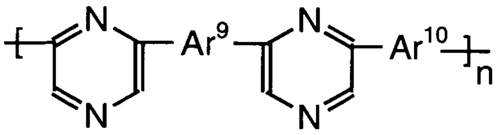

(IX)

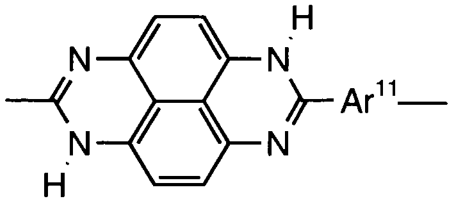

(X)

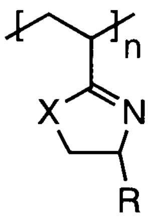

(XI)

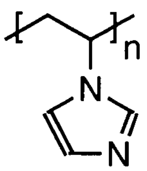

(XII)

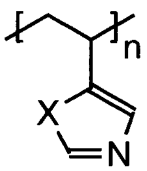

(XIII)

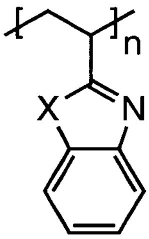

(XIV)

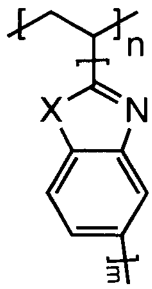

(XV)

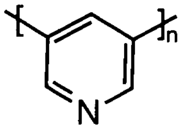

(XVI)

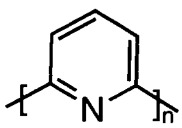

(XVII)

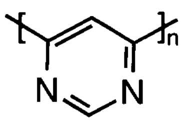

(XVIII)

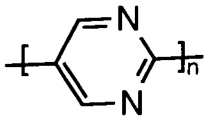

(XIX)

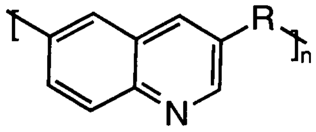

(XX)

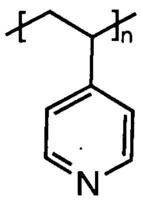

(XXI)

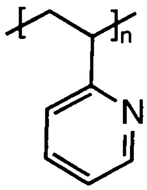

(XXII)

where

Ar are identical or different and represent a tetravalent aromatic or het- eroaromatic group which can be mononuclear or polynuclear,

$Ar^1$ are identical or different and represent a divalent aromatic or het- eroaromatic group which can be mononuclear or polynuclear,

$Ar^2$ are identical or different and represent a divalent or trivalent aromatic or heteroaromatic group which can be mononuclear or polynuclear,

$Ar^3$ are identical or different and represent a trivalent aromatic or het- eroaromatic group which can be mononuclear or polynuclear,

$Ar^4$ are identical or different and represent a trivalent aromatic or het- eroaromatic group which can be mononuclear or polynuclear,

$Ar^5$ are identical or different and represent a tetravalent aromatic or het- eroaromatic group which can be mononuclear or polynuclear,

$Ar^6$ are identical or different and represent a divalent aromatic or het- eroaromatic group which can be mononuclear or polynuclear,

$Ar^7$ are identical or different and represent a divalent aromatic or het- eroaromatic group which can be mononuclear or polynuclear,

$Ar^8$ are identical or different and represent a trivalent aromatic or het- eroaromatic group which can be mononuclear or polynuclear,

Ar9 are identical or different and represent a divalent or trivalent or tetrava- lent aromatic or heteroaromatic group which can be mononuclear or polynuclear,

Ar10 are identical or different and are each a divalent or trivalent aromatic or heteroaromatic group which can be mononuclear or polynuclear,

Ar11 are identical or different and represent a divalent aromatic or het- eroaromatic group which can be mononuclear or polynuclear,

X are identical or different and represent oxygen, sulfur or an amino group bearing a hydrogen atom, a group having 1-20 carbon atoms, prefera- bly a branched or unbranched alkyl or alkoxy group, or an aryl group as further radical,

R identical or different, represent hydrogen, an alkyl group or an aromatic group and

n, m are each an integer greater than or equal to 10, preferably greater than or equal to 100,

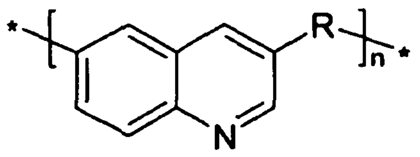

(XX)

where

R identical or different, respresents an alkyl group and an aromatic group and

n is an integer greater than or equal to 10, preferably greater than or equal to 100.

**11.** The membrane according to claim 1, **characterized in that** a polymer selected from the group consisting of polybenzimidazole, poly(pyridines), poly(pyrimidines), polyimidazoles, polybenzothiazoles, polybenzoxazoles, polyoxadiazoles, polyquinoxalines, polythiadiazoles and poly(tetrazapyrenes) is formed in step C).

**12.** The membrane according to claim 1, **characterized in that** a polymer is formed in step C) containing recurring benzimidazole units of the formula

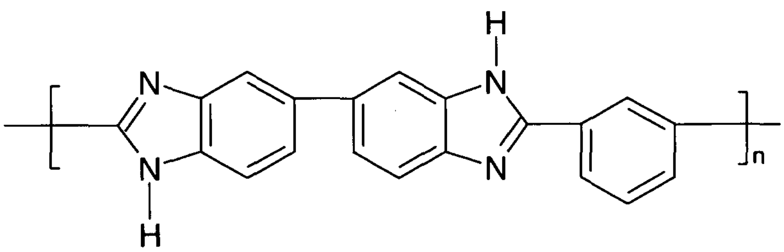

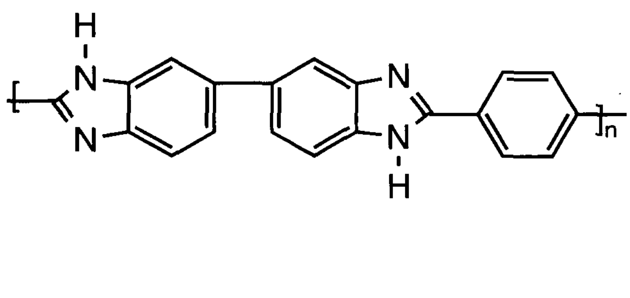

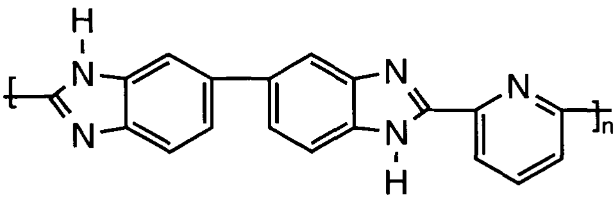

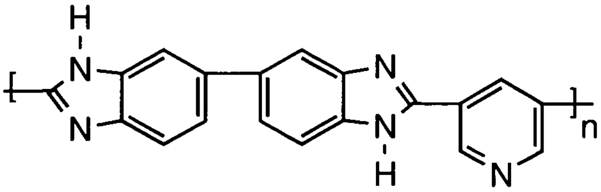

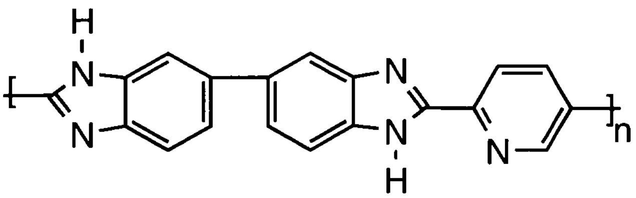

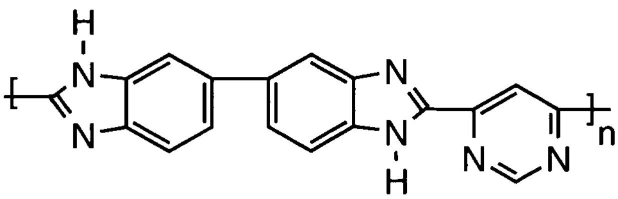

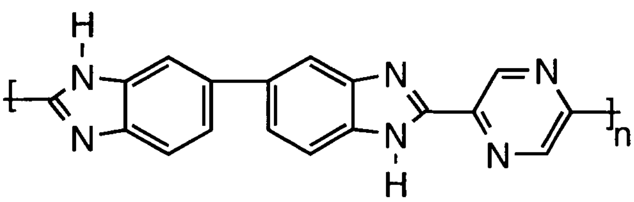

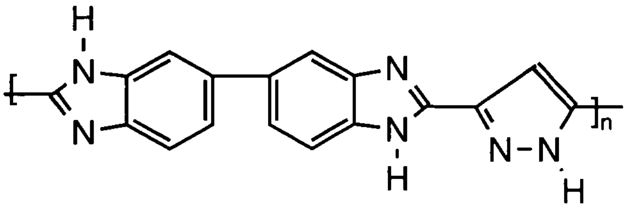

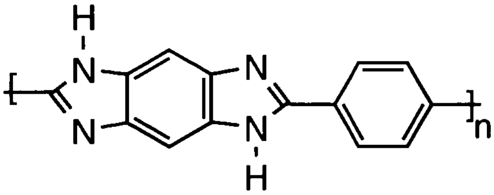

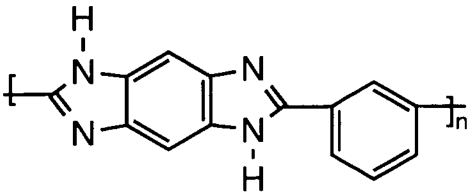

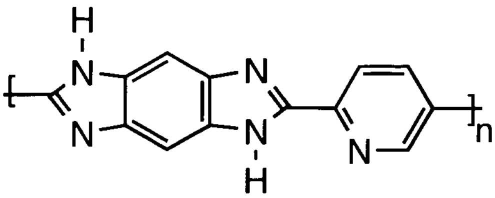

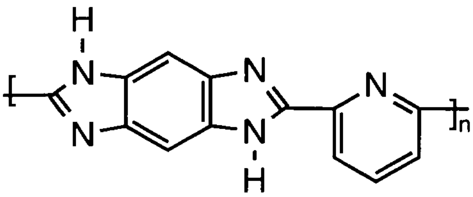

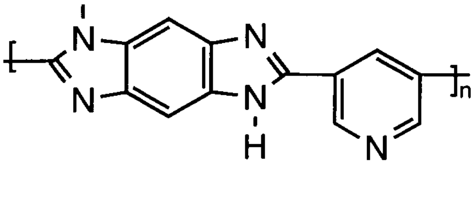

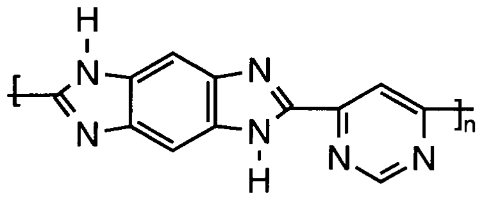

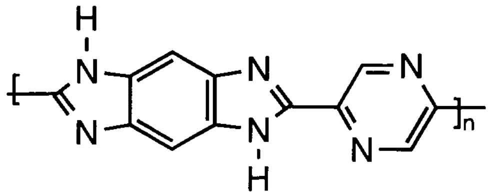

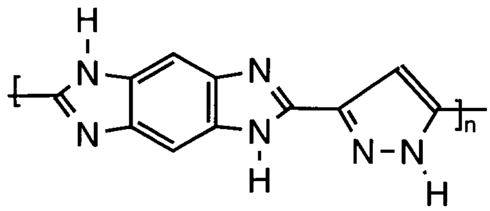

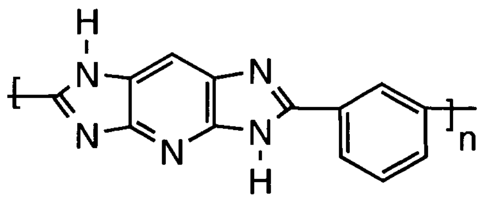

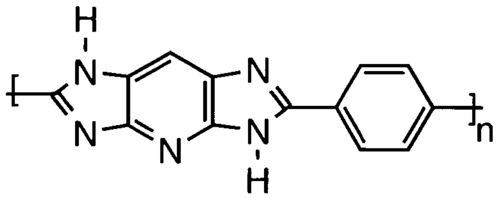

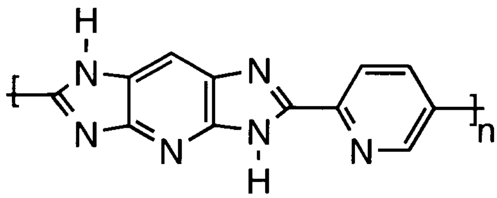

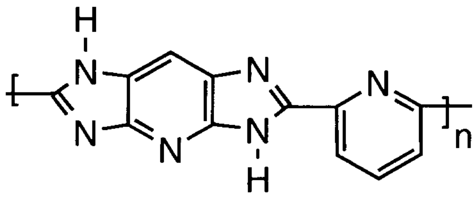

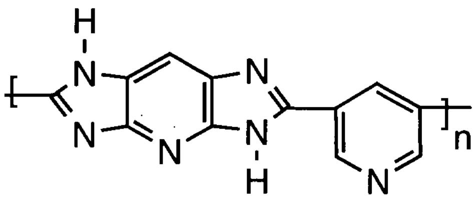

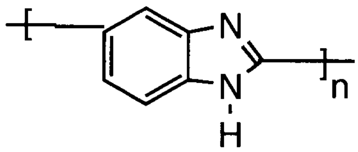

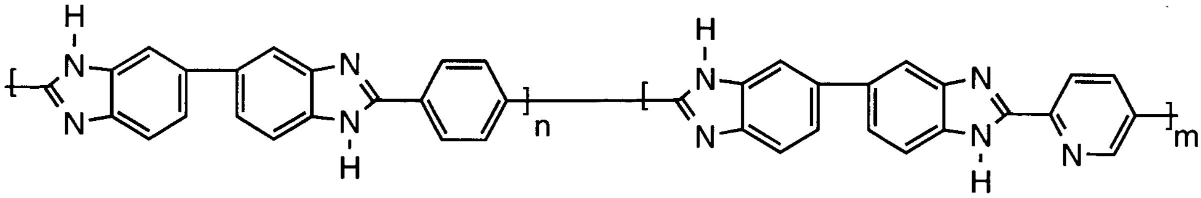

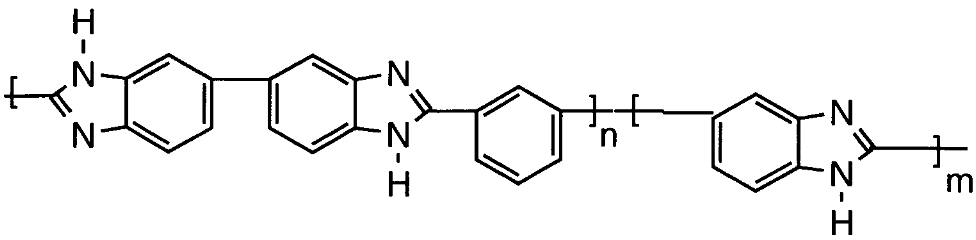

where n and m are each an integer greater than or equal to 10, preferably greater than or equal to 100.

13. The membrane according to claim 1, **characterized in that** the viscosity is adjusted by addition of phosphoric acid after step C) and before step D).

14. The membrane according to claim 1, **characterized in that** the treatment of the membrane in step E) is carried out at temperatures above 0 °C to 150 °C, preferably at temperatures from 10 °C to 120 °C, in particular from room temperature (20 °C) to 90 °C, in the presence of moisture or water and/or water vapor.

**15.** The membrane according to claim 1, **characterized in that** the treatment of the membrane in step E) is carried out for 10 seconds to 300 hours, preferably from 1 minute to 200 hours.

**16.** The membrane according to claim 1, **characterized in that** an electrode is chosen as support in step D) and the treatment according to step E) is such that the membrane formed is no longer self-supporting.

**17.** The membrane according to claim 1, **characterized in that** the membrane formed in step D) has a thickness of 20 to 4000 μm, preferably from 30 to 3500 μm, in particular from 50 to 3000 μm.

**18.** The membrane according to claim 1, **characterized in that** the membrane formed in step E) has a thickness of 15 to 3000 μm, preferably from 20 to 2000 μm, in particular from 20 to 1500 μm, and is self-supporting.

**19.** An electrode provided with a proton-conducting polymer coating based on polyazoles which is obtainable by a method comprising the steps

A) Reaction of one or more aromatic tetraamino compounds with one or more aromatic carboxylic acids or esters thereof which contain at least two acid groups per carboxylic acid monomer, or of one or more aromatic and/or heteroaromatic diaminocarboxylic acids in the melt at temperatures of up to 350 °C, preferably up to 300 °C,
B) Dissolution of the solid prepolymer obtained according to step A) in polyphosphoric acid,
C) Heating of the solution obtainable according to step B) to temperatures of up to 300 °C, preferably 280 °C, under inert gas to form the dissolved polyazole polymer,
D) Application of a layer to an electrode using the solution of the polyazole polymer according to step C), and
E) Treatment of the layer formed in step D) in the presence of moisture.

**20.** An electrode according to claim 19, wherein the coating has a thickness of 2 to 3000 μm, preferably from 3 to 2000 μm, in particular from 5 to 1500 μm.

**21.** A membrane-electrode assembly containing at least one electrode according to claim 19 or 20 and at least one membrane according to one or more of claims 1 to 18.

**22.** A membrane-electrode assembly comprising at least one electrode and at least one membrane according to one or more of claims 1 to 18.

**23.** A fuel cell containing one or more membrane-electrode assemblies according to claim 21 or 22.

## Revendications

**1.** Membrane polymère conductrice de protons à base de polyazoles pouvant être obtenue par un procédé englobant les étapes

A) Réalisation d'une ou plusieurs liaisons tétra-amino-aromatiques avec un ou plusieurs acides carboxyliques aromatiques ou leurs esters, qui contiennent au moins deux groupes d'acide par monomère d'acide carboxylique ou d'un ou plusieurs acides diamino-carboxyliques aromatiques et / ou hétéroaromatiques, dans la fusion à des température atteignant 350 °C, de préférence jusqu'à 300 °C,
B) Dissolution selon étape A) du pré-polymère fixe obtenu dans acide polyphosphorique ,
C) Réchauffement de la solution pouvant être obtenue selon l'étape B) sous gaz inerte à des températures atteignant 300 °C, de préférence allant jusqu'à 280 °C sous formation du polymère polyazole dissout ,
D) Formation d'une membrane avec utilisation de la solution du polymère-polyazole selon étape C) sur un support et
E) Traitement de la membrane formée dans l'étape D) en présence d'humidité à des températures et pour une durée suffisante jusqu'à ce qu'elle devienne autoporteuse.

**2.** Membrane selon revendication 1, **caractérisée en ce que**, en tant que liaisons tétra-amino-aromatiques 3,3',4,4'-tetraaminobiphenyle, 2,3,5,6-tetraaminopyridine, 1,2,4,5-tetraaminobenzole, 3,3',4,4'-sulfone de tetraaminodiphényle, 3,3,4,4'- éther tetraaminodiphényle, 3,3',4,4'-tetraaminobenzophénone, 3,3',4,4'-méthane tetraaminodiphényle et 3,3',4,4'-méthane tetraaminodiphenyldimethyle.

**3.** Membrane selon revendication 1, **caractérisée en ce que**, comme acide dicarboxylique aromatique, l'acide isophtalique, acide téréphtalique, acide phtalique, acide 5-hydroxyisophthalique, acide 4-hydroxyisophthalique, acide 2-hydroxyterephtalique, acide 5-aminoisophtalique, 5-N, acide N-dimethylaminoisophtalique, 5-N,acide N-diethyl aminoisophtalique, acide 2,5-dihydroxyterephtalique, acide 2,5 dihydroxyisophtalique, acide 2,3-dihydroxyisophtalique, acide 2,3-dihydroxyphtalique, acide 2,4-dihydroxyphtalique. Acide 3,4-dihydroxyphtalique, acide 3-fluorophtalique, acide 5- fluoroisophtalique, acide 2 fluoroterphtalique, acide tetrafluorophtalique, acide tetrafluoroisophtalique, acide tetrafluoroterephtalique, acide 1,4- naphthalènedicarboxylique, acide 1,5-naphthalènedicarboxylique, acide 2,6-naphthalènedicarboxylique, acide 2,7-naphthalènedicarboxylique, acide diphénique, acide 1,8-dihydroxynaphtalène- 3,6-dicarboxylique, éther diphénylique-acide 4,4'-dicarboxylique, benzophénone-acide 4,4'-dicarboxylique, sulfone de diphényl -4,4' acide dicarboxylique, acide biphényle 4,4'-dicarboxylique, acide 4-trifluoromethylphtalique, 2,2-Bis(4-carboxyphényle)hexafluoropropane, acide 4,4'-stilbène dicarboxylique, acide 4-carboxycinnamique, ou leur ester alkyle C1-C20 ou ester aryle C5-C12, ou leur anhydride d'acide ou leur chlorure d'acide sont utilisés.

**4.** Membrane selon revendication 1 **caractérisée en ce que**, comme acide carboxylique aromatique, des acides tricarboxylique, acides tétracarboxyliques ou leur ester alkyle C1-C20 ou ester aryle C5-C12 ou leur anhydride d'acide ou leur chlorure d'acide, de préférence acide 1,3,5-benzène tricarboxylique (acide trimésique); acide 1,2,4 benzène tricarboxylique (acide trimellitique); acide iminodiacétique (2-carboxyphényle), acide 3,5,3'-biphenyltricarboxylique; acide 3,5,4'-biphenyltricarboxylique et/ou acide 2,4,6-pyridinetricarboxylique sont utilisés.

**5.** Membrane selon revendication 1, **caractérisée en ce que**, en tant qu'acide aromatique carboxylique, des acides tétracarboxyliques leur ester alkyle C1-C20 ou ester aryle C5-C12 ou leur anhydride d'acide ou chlorure d'acide, de préférence acide de benzène 1,2,4,5-tétracarboxylique; acide naphthalène-1,4,5,8-tetracarboxylique acide 3,5,3', 5'-biphenyltetracarboxylique; acide de benzophénone tetracarboxylique, acide 3,3',4,4'-biphényltétracarboxylique, acide 2,2',3,3'-biphényltétracarboxylique, acide 1,2,5,6-naphthalène tétracarboxylique, acide 1,4,5,8-naphthalène tétracarboxylique sont utilisés.

**6.** Membrane selon revendication 4 **caractérisée en ce que** la teneur en acide tricaboxylique ou acides tétracarboxyliques (relatifs à l'acide dicarboxylique employé) s'élève à une valeur comprise entre 0 et 30 % de Mol de préférence 0,1 et 20 % de Mol, plus particulièrement 0,5 et 10 % de Mol.

**7.** Membrane selon revendication 1, **caractérisée en ce que** comme acides hétéroaromatiques carboxyliques, des acides hétéroaromatiques dicarboxyliques et acides tricarboxyliques et acides tétracarboxyliques sont utilisés, lesquels contiennent au moins un atome d'azote, d'oxygène, de soufre ou de phosphore dans l'aromate, de préférence acide pyridine dicarboxylique-2,5, acide pyridine dicarboxylique-3,5, acide pyridine dicarboxylique-2,6, acide pyridine dicarboxylique-2,4, acide phénylique 4 -acide pyridine dicarboxylique 2,5, acide 3,5-pyrazole dicarboxylique, acide 2,6 -pyrimidine dicarboxylique, acide 2,5-pyrazine dicarboxylique, acide 2,4,6-pyridine tricarboxylique, et leur ester alkyle C1-C20 ou ester aryle C5-C12, ou leur anhydride d'acide ou leur chlorure d'acide.

**8.** Membrane selon revendication 1, **caractérisée en ce que** dans l'étape B) un acide polyphosphorique avec une teneur calculée en tant que $P_2O_5$ (acidimetrique) d'au moins 85% est utilisé.

**9.** Membrane selon revendication 1, **caractérisée en ce que** dans l'étape B) au lieu d'une solution du pré-polymère une dispersion/suspension est produite.

**10.** Membrane selon revendication 1, **caractérisée en ce que**, dans l'étape C) un polymère à base de polyazole comprenant des unités d'azole répétitives des formules générales (I) et/ou (II) et/ou (III) et/ou (IV) et/ou (V) et/ou (VI) et/ou (VII) et/ou (VIII) et/ou (IX) et/ou (X) et/ou (XI) et/ou (XII) et/ou (XIII) et/ou (XIV) et/ou (XV) et/ou (XVI) et/ou (XVI) et/ou (XVII) et/ou (XVIII) et/ou (XIX) et/ou (XX) et/ou (XXI) et/ou (XXII)

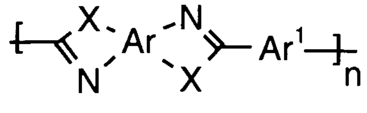 (I)

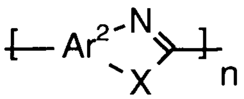

(II)

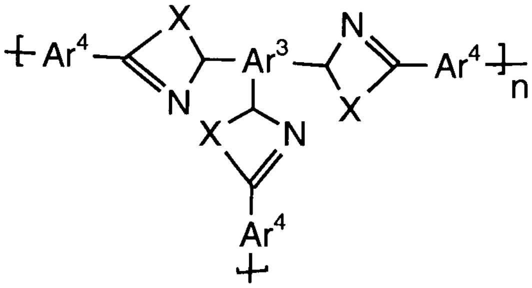

(III)

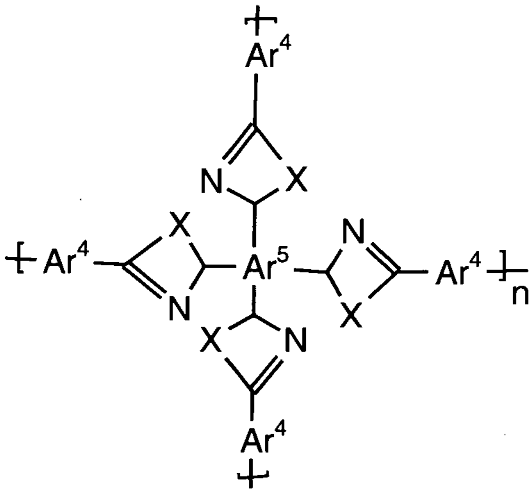

(IV)

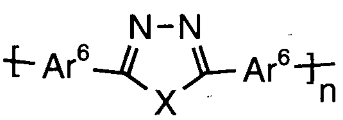

(V)

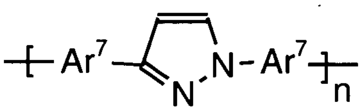

(VI)

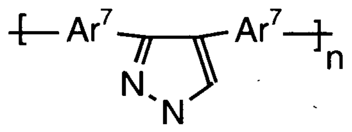

(VII)

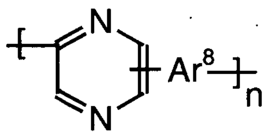

(VIII)

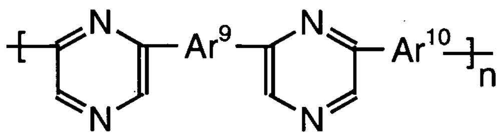

(IX)

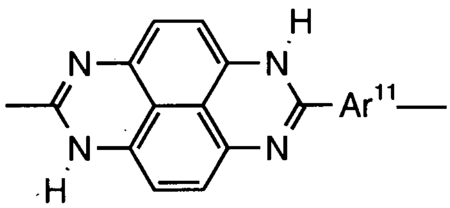

(X)

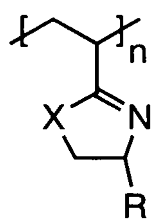

(XI)

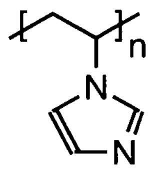

(XII)

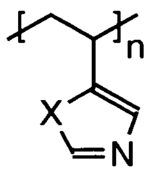

(XIII)

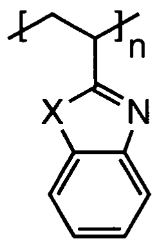

(XIV)

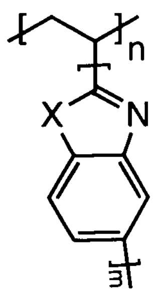

(XV)

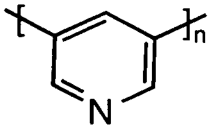

(XVI)

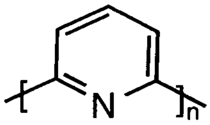

(XVII)

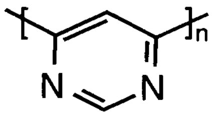

(XVIII)

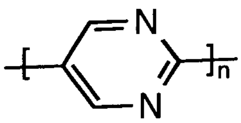

(XIX)

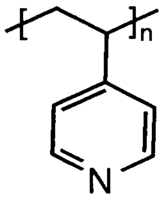

(XXI)

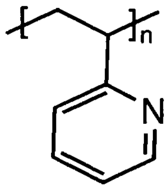

(XXII)

dans laquelle
Ar sont identiques ou différents et pour un groupe aromatique ou hétéroaromatique à quatre liaisons, qui peut être

à un ou plusieurs noyaux,
$Ar^1$ sont identiques ou différents et pour un groupe aromatique ou hétéroaromatique à deux liaisons, qui peut être à un ou plusieurs noyaux,
$Ar^2$ sont identiques ou différents et pour un groupe aromatique ou hétéroaromatique à deux ou trois liaisons, qui peut être à un ou plusieurs noyaux,
$Ar^3$ sont identiques ou différents et pour un groupe aromatique ou hétéroaromatique à trois liaisons, qui peut être à un ou plusieurs noyaux,
$Ar^4$ sont identiques ou différents et pour un groupe aromatique ou hétéroaromatique à trois liaisons, qui peut être à un ou plusieurs noyaux,
$Ar^5$ sont identiques ou différents et pour un groupe aromatique ou hétéroaromatique à quatre liaisons, qui peut être à un ou plusieurs noyaux,
$Ar^6$ sont identiques ou différents et pour un groupe aromatique ou hétéroaromatique à deux liaisons, qui peut être à un ou plusieurs noyaux,
$Ar^7$ sont identiques ou différents et pour un groupe aromatique ou hétéroaromatique à deux liaisons, qui peut être à un ou plusieurs noyaux,
$Ar^8$ sont identiques ou différents et pour un groupe aromatique ou hétéroaromatique à trois liaisons, qui peut être à un ou plusieurs noyaux,
$Ar^9$ sont identiques ou différents et pour un groupe aromatique ou hétéroaromatique à deux ou trois ou quatre liaisons, qui peut être à un ou plusieurs noyaux,
$Ar^{10}$ sont identiques ou différents et pour un groupe aromatique ou hétéroaromatique à deux ou trois liaisons, qui peut être à un ou plusieurs noyaux,
$Arl^{11}$ sont identiques ou différents et pour un groupe aromatique ou hétéroaromatique à deux liaisons, qui peut être à un ou plusieurs noyaux,
X est identique ou différent et pour oxygène, soufre ou un groupe aminé, qui porte un atome d'hydrogène, un groupe présentant un atome de carbone 1-20, de préférence un groupe alkyle ou alkoxy non ramifié ou un groupe aryle comme autre reste
R est identique ou différent pour oxygène, un groupe alkyle et un groupe aromatique et
n, m est un nombre entier supérieur ou égal à 10, de préférence supérieur ou égal à 100,

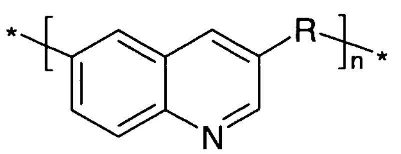

(XX)

dans laquelle
R est identique ou différent pour un groupe alkyle et un groupe aromatique et
n est un nombre entier supérieur ou égal à 10, de préférence supérieur ou égal à 100,
est formé.

**11.** Membrane selon revendication 1 **caractérisé en ce que** dans l'étape C) un polymère sélectionné dans le groupe polybenzimidazole, poly(pyridine), poly(pyrimidine), polyimidazole, polybenzthiazole, polybenzoxazole, polyoxadiazole, polyquinoxalines, polythiadiazole et poly(tetrazapyrène) est formé.

**12.** Membrane selon revendication 1 **caractérisée en ce que** dans l'étape C) un polymère comprenant des unités répétitives de benzimidazole de la formule

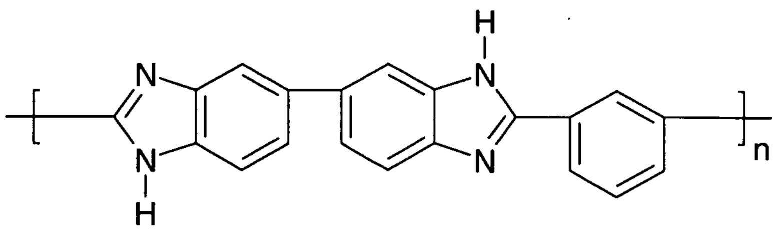

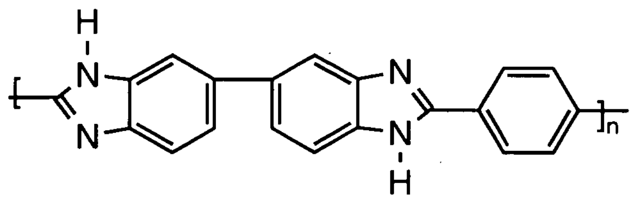

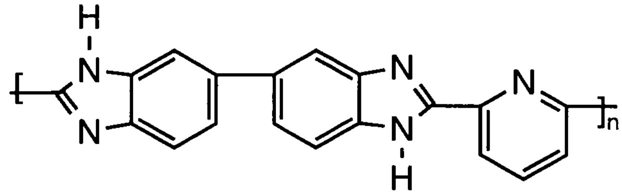

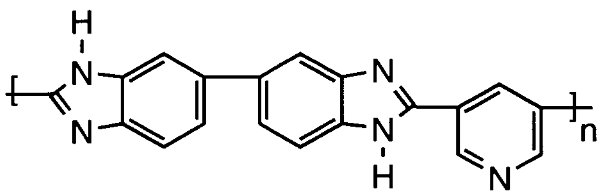

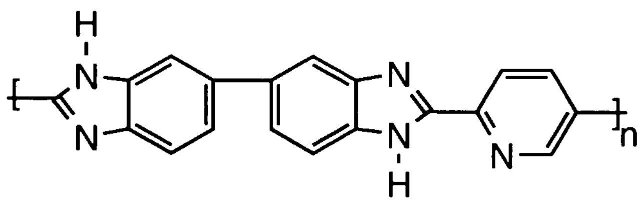

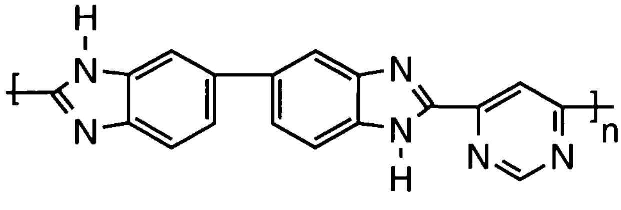

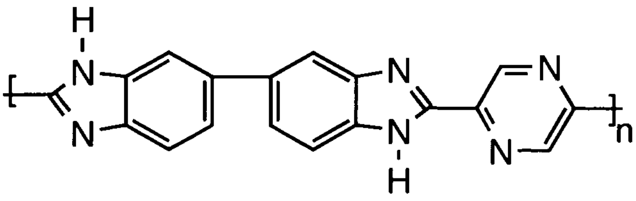

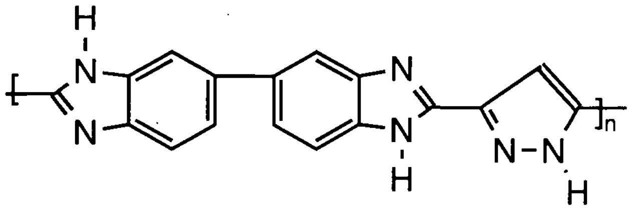

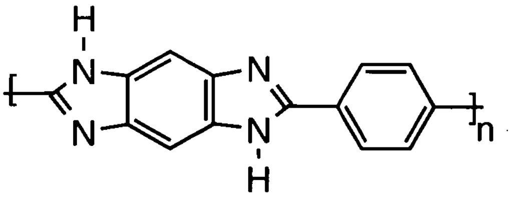

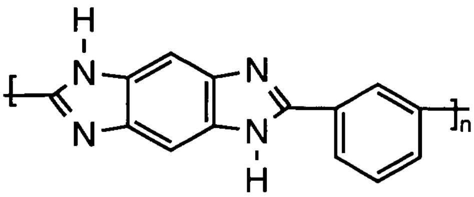

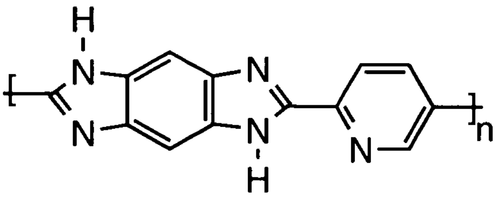

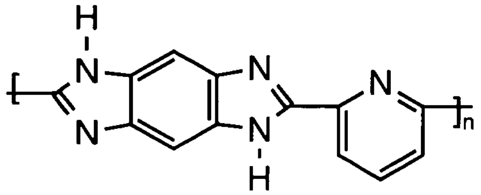

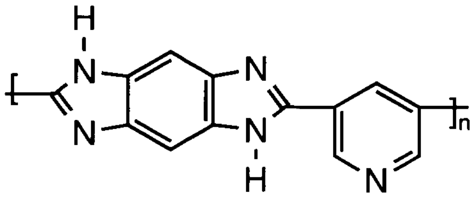

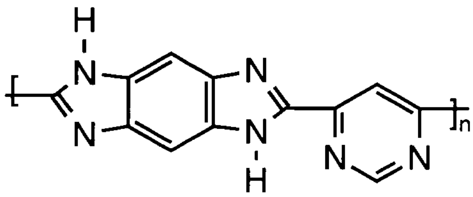

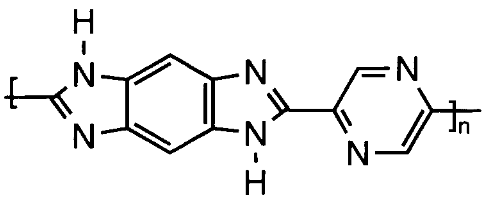

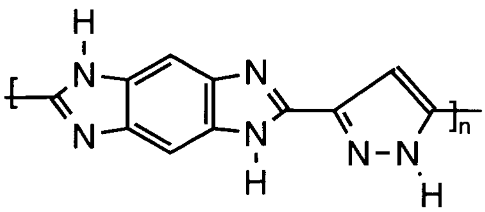

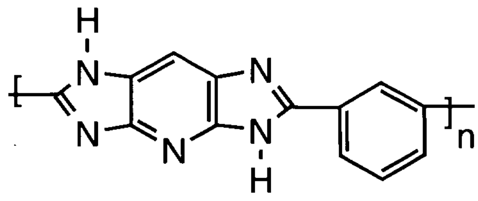

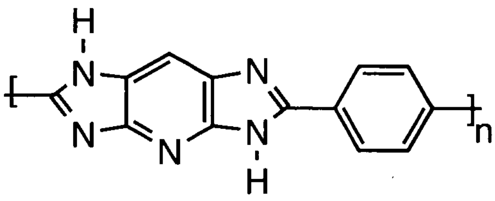

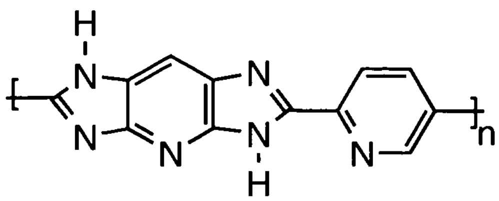

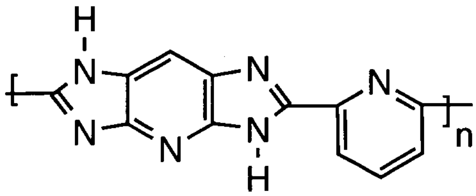

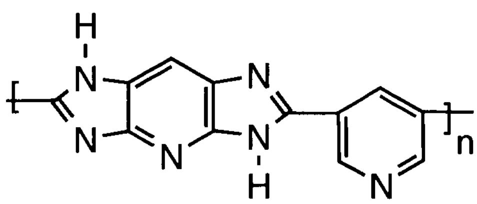

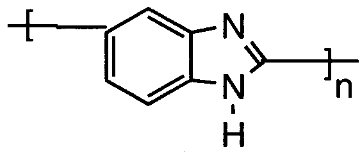

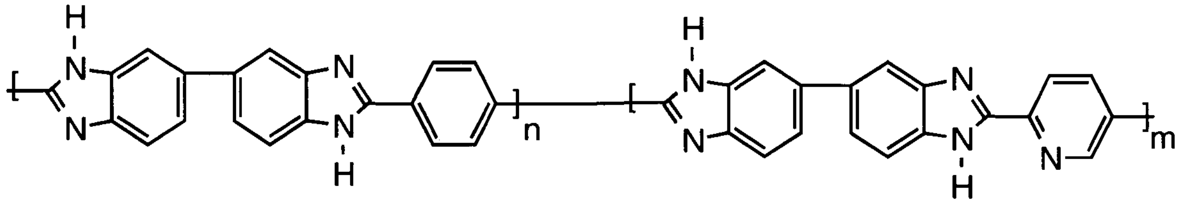

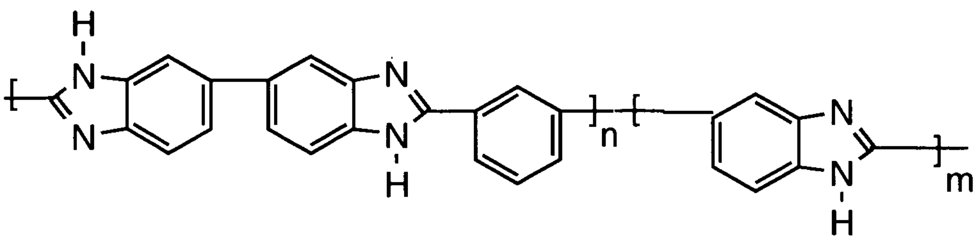

sachant que n et m est un nombre entier supérieur ou égal à 10 de préférence supérieur ou égal à 100, est formé.

**13.** Membrane selon revendication 1 **caractérisée en ce que**, après l'étape C) et avant l'étape D), la viscosité est ajustée par ajout d'acide phosphorique.

**14.** Membrane selon revendication 1, **caractérisée en ce que** le traitement de la membrane dans l'étape E) a lieu à des températures supérieures à 0°C et 150 °C, de préférence à des températures entre 10 °C et 120 °C, plus particulièrement entre la température ambiante (20 °C) et 90 °C, en présence d'humidité ou eau et/ou vapeur d'eau.

**15.** Membrane selon revendication 1, **caractérisée en ce que** le traitement de la membrane dans l'étape E) est de 10 secondes à 300 heures, de préférence entre 1 minute et 200 heures.

**16.** Membrane selon revendication 1, **caractérisée en ce que** dans l'étape D) une électrode est choisie en tant que support et le traitement conçu selon l'étape E) de telle manière que la membrane formée n'est plus autoporteuse.

**17.** Membrane selon revendication 1, **caractérisée en ce que** la membrane formée dans l'étape D) a une épaisseur entre 20 et 4000 µm, de préférence entre 30 et 3500 µm, plus particulièrement entre 50 et 3000 µm.

**18.** Membrane selon revendication 1, **caractérisée en ce que** la membrane formée dans l'étape E) présente une épaisseur entre 15 et 3000 µm, de préférence entre 20 et 2000 µm, plus particulièrement entre 20 et 1500 µm et est auto porteuse.

**19.** Electrode obtenue avec revêtement de polymère conducteur de protons à base de polyazole par un procédé englobant les étapes

A) Réalisation d'une ou plusieurs liaisons tétra-amino-aromatiques avec un ou plusieurs acides carboxyliques

aromatiques ou leurs esters, qui contiennent au moins deux groupes d'acide par monomère d'acide carboxylique ou d'un ou plusieurs acides diamino-carboxyliques aromatiques et / ou hétéroaromatiques, dans la fusion à des température atteignant 350 °C, de préférence jusqu'à 300 °C,

B) Dissolution selon étape A) du pré-polymère fixe obtenu dans acide polyphosphorique,

C) Réchauffement de la solution pouvant être obtenue selon l'étape B) sous gaz inerte à des températures atteignant 300 °C, de préférence allant jusqu'à 280 °C sous formation du polymère polyazole dissout,

D) Application d'une couche avec utilisation de la solution du polymère-polyazole selon étape C) sur une électrode et

E) Traitement de la couche formée dans l'étape D) en présence d'humidité.

**20.** Electrode selon revendication 19, sachant que le revêtement a une épaisseur comprise entre 2 et 3000 μm, de préférence entre 3 et 2000 μm, plus particulièrement entre 5 et 1500 μm.

**21.** Unité membrane-électrode comprenant au moins une électrode selon revendication 19 ou 20 et au moins une membrane selon une ou plusieurs revendications de 1 à 18.

**22.** Unité membrane-électrode comprenant au moins une électrode et au moins une membrane selon une ou plusieurs revendications de 1 à 18.

**23.** Cellule à combustion comprenant une ou plusieurs unités de membrane-électrode selon revendication 21 ou 22.

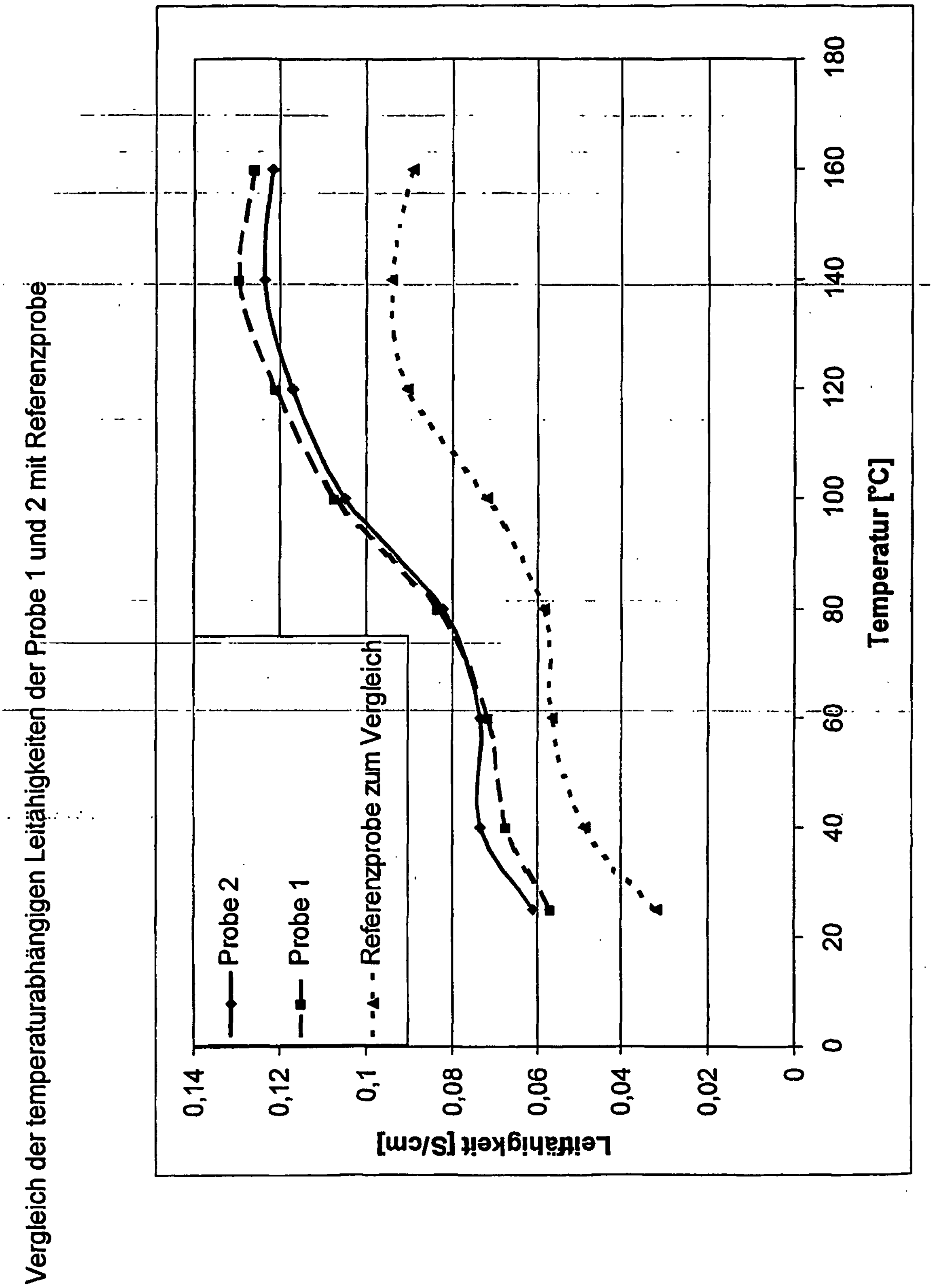


Fig.1: Vergleich der temperaturabhängigen Leitfähigkeiten der Probe 1 und 2 mit Referenzprobe

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10109829
- JP 2001118591 A
- US 4191618 A
- US 4212714 A
- US 4333805 A


### In der Beschreibung aufgeführte Nicht-Patentliteratur


- **Gang, Xiao ; Hjuler, H. A. ; Olsen, C. ; Berg, R. W. ; Bjerrum, N. J.** Electrolyte additives for phosphoric acid fuel cells. *J. Electrochem. Soc.,* 1993, vol. 140 (4), 896-902
- **Razaq, M. ; Razaq, A. ; Yeager, E. ; DesMarteau ; Darryl D. ; Singh, S.** Perfluorosulfonimide as an additive in phosphoric acid fuel cell. *J. Electrochem. Soc.,* 1989, vol. 136 (2), 385-90
- **F. Gugumus.** Plastics Additives. Hanser Verlag, 1990
- **N.S. Allen ; M. Edge.** Fundamentals of Polymer Degradation and Stability. Elsevier, 1992
- **H. Zweifel.** Stabilization of Polymeric Materials. Springer, 1998